(19) Europäisches Patentamt
European Patent Office
Office européen des brevets

(11) **EP 3 838 472 B1**

(12) **EUROPÄISCHE PATENTSCHRIFT**

(45) Veröffentlichungstag und Bekanntmachung des Hinweises auf die Patenterteilung:
**07.06.2023   Patentblatt 2023/23**

(21) Anmeldenummer: **21155408.4**

(22) Anmeldetag: **27.10.2017**

(51) Internationale Patentklassifikation (IPC):
***B23K 26/03*** (2006.01)   ***B23K 26/082*** (2014.01)
***B23K 26/342*** (2014.01)   ***G02B 15/16*** (2006.01)
***G02B 26/10*** (2006.01)   ***G02B 27/10*** (2006.01)

(52) Gemeinsame Patentklassifikation (CPC):
**G02B 26/101; B23K 26/032; B23K 26/0643; B23K 26/082; B23K 26/342; G02B 15/142; G02B 27/108**

(54) **ABLENKEINHEIT MIT ZWEI FENSTERN, EINEM OPTISCHEN ELEMENT UND EINER XY-ABLENKVORRICHTUNG**

DEFLECTION UNIT WITH TWO WINDOWS, ONE OPTICAL ELEMENT AND A XY DEFLECTION DEVICE

UNITÉ DE DÉVIATION AVEC DEUX FENÊTRES, UN ÉLÉMENT OPTIQUE ET UN DISPOSITIF DE DÉVIATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.10.2016   DE 102016120523**

(43) Veröffentlichungstag der Anmeldung:
**23.06.2021   Patentblatt 2021/25**

(60) Teilanmeldung:
**22199597.0 / 4 151 354**

(62) Dokumentnummer(n) der früheren Anmeldung(en) nach Art. 76 EPÜ:
**17793923.8 / 3 532 238**

(73) Patentinhaber: **Raylase GmbH**
**82234 Wessling (DE)**

(72) Erfinder:
• **BÖHMER, Carl**
  **35578 Wetzlar (DE)**
• **LEHMANN, Wolfgang**
  **82110 Germering (DE)**
• **SCHIEFEN, Christian**
  **82131 Gauting (DE)**
• **SCHÖN, Philipp**
  **82266 Buch am Ammersee (DE)**

(74) Vertreter: **Lucke, Andreas**
**Boehmert & Boehmert**
**Anwaltspartnerschaft mbB**
**Pettenkoferstrasse 22**
**80336 München (DE)**

(56) Entgegenhaltungen:
KR-A- 20120 114 651      US-A1- 2005 150 876
US-A1- 2009 206 065      US-A1- 2014 263 221
US-A1- 2016 114 432

**Beschreibung**

TECHNISCHES GEBIET

Die vorliegende Erfindung liegt auf dem Gebiet der Laserfertigungs- und Laserverarbeitungstechnik und betrifft eine Ablenkeinheit.

HINTERGRUND

Für eine Vielzahl industrieller Fertigungs- und Verarbeitungsprozesse werden Ablenkeinheiten verwendet, um den Verlauf von Laserstrahlen räumlich und zeitlich zu manipulieren und sie dadurch innerhalb eines Arbeitsfeldes über eine Arbeitsfläche zu scannen.

Ein beispielhaftes Einsatzgebiet von Ablenkeinheiten ist die laserbasierte additive Fertigung. Die additive Fertigung bietet einen großen gestalterischen Freiraum bei der Bauteilkonzeption und eignet sich besonders gut für den schnellen Modellbau, der auch als "Rapid Prototyping" bezeichnet wird.

Neben der Verwendung beim Rapid Prototyping wird die additive Fertigung auch zunehmend für eine industrielle Fertigung mit größeren Stückzahlen verwendet, so dass sich das Einsatzgebiet der additiven Fertigung vom Rapid Prototyping in zunehmendem Maße auch bis auf die industrielle Massenfertigung bzw. das sog. "Rapid Manufacturing" ausweitet. Dabei gewinnt das additive Fertigen in der industriellen Produktion mehr und mehr an Bedeutung, beispielsweise bei der Verarbeitung von Metallen und in den Bereichen der Luftfahrt und der Medizintechnik. Zudem hat es das Potenzial, viele klassische industrielle Herstellungsverfahren, wie z.B. Gießen, zu ersetzen.

Das laserbasierte additiven Fertigen umfasst die Prozesse "Direct Powder Fusion", d.h. ein Verfahren, bei dem mittels eines Laserstrahls, beispielsweise eines Hochenergielaserstrahls, ein Pulverbett lokal und selektiv aufgeschmolzen wird, "Vat Photopolymerization", d.h. ein Verfahren, bei dem ein Bad eines Materials, beispielsweise eines Harzes, selektiv und lokal mittels eines Lasers belichtet und damit gehärtet wird, und "Direct Energy Deposition", d.h. ein Verfahren, bei dem Pulver parallel bzw. in gleiche Richtung zur Laserstrahlung eingebracht wird, um dadurch Material aufzutragen. Bei diesen Prozessen handelt es sich um flächenbasierte Bauprozesse, bei denen Schicht-für-Schicht ("layer-by-layer") ein Volumen erzeugt wird. Dabei wird der durch die Ablenkeinheit gelenkte Laserstahl über eine planare Arbeitsfläche, beispielsweise die Oberfläche eines Kunststoffbades (Vat Photopolymerization) oder eines Pulverbettes (Direct Powder Fusion), gescannt, um an gewünschten Bereichen der Oberflächenschicht eine laserinduzierte Polymerisation des Kunststoffs bzw. ein Verschmelzen oder Sintern der Pulverkörner hervorzurufen. Dabei wird eine neue Bauteilschicht oder Bauteillage erzeugt und mit der darunterliegenden Bauteilschicht stoffschlüssig verbunden. Dies wird Schicht für Schicht wiederholt, wobei die bereits gefertigten Bauteilschichten in Bezug auf die Ablenkeinheit abgesenkt werden und über die jeweils zuletzt gefertigte Schicht eine neue Schicht losen Materials, z.B. nicht polymerisierter Kunststoff oder Pulver, aufgebracht wird. Anschließend wird der Laserscanprozess entsprechend der Form des zu fertigenden Bauteils auf die neue Schicht angewendet.

Solche laser- und flächenbasierten additiven Bauprozesse können innerhalb einer Ebene vergleichsweise schnell voranschreiten, beispielsweise bis zu 4 m/s, können allerdings aufgrund der Vielzahl von Schichten, die zur Herstellung eines Bauteils erforderlich sind, mehrere Tage andauern, in denen der Prozess rund um die Uhr voranschreitet. Dabei sind die Genauigkeitsanforderungen, die im Bereich von 10-20 µm und darunter liegen können, sehr hoch.

Bereits kleinste Prozessabweichungen können dazu führen, dass die geforderte Genauigkeit nicht über das gesamte Bauteilvolumen eingehalten wird. Dies kann entweder dazu führen, dass eine zeitintensive Nachbearbeitung erforderlich ist, sofern dies möglich ist. Sofern dies nicht ohne weiteres möglich ist, beispielsweise bei Fehlern innerhalb des Bauteilvolumens, kann es auch erforderlich sein, das gesamte Bauteil neu zu fertigen. Zudem kann es vorkommen, dass Prozessabweichungen unentdeckt bleiben.

Um dies zu vermeiden und um beim Auftreten von Prozessfehlern unmittelbar korrigierend eingreifen zu können, ist es notwendig, den Prozess während der Fertigung zu beobachten und zu überwachen. Eine solche Online-Qualitätskontrolle gestattet in Kombination mit einer Prozessregelung und/oder Prozesssteuerung prozessbedingte Bauteilfehler unmittelbar zu beheben oder ganz zu vermeiden. Dadurch können die Prozesseffizienz, die Prozesszuverlässigkeit sowie der Durchsatz erheblich gesteigert werden und klassische, volumenbasierte Herstellungsverfahren wie z.B. das Gießen, ersetzt werden.

Aus der DE 10 2013 017 795 B3 ist beispielsweise eine Laser-Scanner-Schweißvorrichtung bekannt, die eine Ablenkeinheit zum Scannen eines Laserstrahls und eine interne Kamera für eine Online-Qualitätskontrolle umfasst. Bei dieser Vorrichtung wird mithilfe eines dichroitischen Spiegels der Arbeitsstrahlengang mit dem Sichtfeld der Kamera überlagert, sodass beim Scannen mithilfe eines Scanspiegels das Sichtfeld der Kamera auf dem Werkstück synchron mit dem Arbeitslaserstrahl mitbewegt wird. Zwischen dem dichroitischen Spiegel und dem Scanspiegel ist eine bewegliche Fokussierlinse im Arbeitsstrahlengang und im Bildstrahlengang angeordnet, um den Fokuspunkt des Laserstrahls einzustellen.

Aus der KR 2012 0114651 A ist eine Ablenkeinheit gemäß dem Oberbegriff des Anspruchs 1 bekannt. Dieses Dokument beschreibt eine Laserschweißmaschine, in die Laserlicht durch ein erstes Fenster in Vertikalrichtung eintritt. Das Laserlicht wird daraufhin von einer Kollimationslinse kollimiert, von einem ersten Spiegel in eine Horizontalrichtung umgelenkt, von einem zweiten Spiegel wieder in die Vertikalrichtung umgelenkt und von einer F-Theta-Linse fokussiert. Die Kollimationslinse lässt sich dabei als einzige bewegbare Linse an- und abheben.

Die US 2014/0263221 A1 offenbart eine Laserdekontaminierungsvorrichtung, die eine Z-Achse-Scanvorrichtung umfasst, die eine feststehende Linse und eine einzige verschiebbare Linse aufweist.

In der US 2005/0150876 A1 wird eine Vorrichtung zum Laser-Schweißen beschrieben, in die Laserlicht durch ein erstes Fenster eintritt, und von einer ersten Gruppe bewegbarer Linsen kollimiert wird. Das Laserlicht wird daraufhin von einer weiteren beweglichen Linse in einen divergenten Lichtstrahl umgewandelt und von einem festen Spiegel von einer Horizontalrichtung in eine Vertikalrichtung umgelenkt. Das Laserlicht wird sodann von einer feststehenden Linse fokussiert und von einem zweiten Spiegel abgelenkt, woraufhin das Laserlicht durch ein zweites Fenster aus der Vorrichtung austritt. Der erste feste Spiegel ist im Laserlichtstrahlengang zwischen der weiteren beweglichen Linse und der feststehenden Linse angeordnet. Diese Vorrichtung implementiert keinen Planfeldausgleich.

ZUSAMMENFASSUNG DER ERFINDUNG

Der vorliegenden Erfindung liegt die Aufgabe zugrunde, eine Ablenkeinheit zur Verfügung zu stellen, welche einen verbesserten Laserarbeitsprozess und eine verbesserte Prozessbeobachtung, Prozessüberwachung, Prozesskontrolle und Prozesssteuerung gestattet, insbesondere bei einem laserbasierten additiven Fertigungsprozess.

Diese Aufgabe wird durch den Gegenstand des Anspruchs 1 gelöst. Vorteilhafte Ausführungsformen und Weiterbildungen sind in den abhängigen Ansprüchen angegeben. Im Anspruch 15 werden Verwendungen dieser Ablenkeinheit angegeben.

Die vorliegende Erfindung betrifft eine Ablenkeinheit gemäß Anspruch 1, insbesondere zur Laserfertigung und zum Beobachten eines Laserfertigungsprozesses. Die erfindungsgemäße Ablenkeinheit umfasst ein erstes Fenster, durch das ein optischer Arbeitsstrahl in die Ablenkeinheit eintreten kann, ein zweites Fenster, durch das der Arbeitsstrahl aus der Ablenkeinheit austreten kann und durch das Detektionsstrahlen von einem Arbeitsbereich entlang des jeweiligen Verlaufs des austretenden Arbeitsstrahls und gegenläufig zu diesem in die Ablenkeinheit eintreten können, eine optionale erste Detektionseinrichtung, vorzugsweise innerhalb der Ablenkeinheit, und ein optisches Element, das eine erste Wellenlänge zumindest teilweise reflektiert und das optional ferner zumindest eine andere zweite Wellenlänge zumindest teilweise transmittiert. Die Ablenkeinheit definiert einen Arbeitsstrahlengang, den der Arbeitsstrahl vom ersten Fenster zum zweiten Fenster über eine Reflektion am optischen Element durchläuft. Das erste Fenster entspricht der Arbeitsstrahlzuführung, beispielsweise einem Faserende, durch die der Arbeitsstrahl in die Ablenkeinheit eintritt.

Wenn die Ablenkeinheit eine erste Detektionseinrichtung umfasst, definiert die Ablenkeinheit ferner einen Detektionsstrahlengang, den die Detektionsstrahlen vom zweiten Fenster zur ersten Detektionseinrichtung durchlaufen, wobei die Detektionsstrahlen zumindest teilweise durch das optische Element transmittiert werden.

Die Ablenkeinheit umfasst weiterhin eine XY-Ablenkvorrichtung, die zwischen dem zweiten Fenster und dem optischen Element im Arbeitsstrahlengang und, wenn die erste Detektionseinrichtung vorhanden ist, im Detektionsstrahlengang angeordnet ist, um den Arbeitsstrahl abzulenken, um den ausgetretenen Arbeitsstrahl zu scannen und um gleichzeitig die Detektionsstrahlen gegebenenfalls abzulenken, damit sie den Detektionsstrahlengang durch das optische Element hindurch bis hin zur ersten Detektionseinrichtung durchlaufen, eine Fokussiervorrichtung zur Fokussierung des Arbeitsstrahls, wobei die Fokussiervorrichtung eine veränderbare Brennweite aufweist und im Arbeitsstrahlengang zwischen dem ersten Fenster und dem optischen Element angeordnet ist.

Ferner kann die Ablenkeinheit, wenn die erste Detektionseinrichtung vorhanden ist eine Optikvorrichtung umfassen, die im Detektionsstrahlengang zwischen dem optischen Element und der ersten Detektionseinrichtung angeordnet ist und die eingerichtet ist, eine Brennweite für die Detektionsstrahlen zu verändern.

Die jeweils veränderbaren Brennweiten, erlauben bei einer entsprechenden jeweiligen Ansteuerung, eine jeweilige Anpassung an unterschiedliche Auslenkwinkel bei gleichem Arbeitsabstand, d.h. einen sog. Planfeldausgleich, sowie eine Anpassung auf unterschiedliche Arbeitsabstände. "Veränderbare Brennweite" kann insbesondere bedeuten, dass die Brennweite anpassbar ist und/oder dass eine Fokusnachführung während des Prozesses möglich ist. Eine starre Festoptik mit unveränderlicher Brennweite hat demnach keine veränderbare Brennweite. Die Möglichkeit eines Planfeldausgleiches ist besonders vorteilhaft für eine laserbasierte additive Fertigung, bei welcher der Laser über ein planes, ebenes Arbeitsfeld gescannt wird und dabei stets auf der Oberfläche des Arbeitsfeldes fokussiert sein kann bzw. bleiben kann.

Im Unterschied zum eingangs genannten Stand der Technik, umfasst die erfindungsgemäße Ablenkeinheit eine Fokussiervorrichtung und, optional, eine Optikvorrichtung für eine jeweils veränderbare Brennweite für die Arbeitsstrahlen bzw. für die zu detektierenden Detektionsstrahlen. Dabei ist die Fokussiervorrichtung nur im Arbeitsstrahl angeordnet und, die Optikvorrichtung kann nur im Detektionsstrahlengang angeordnet sein. Durch diese Entkopplung ist es möglich, die Fokuslage des Arbeitsstrahls zu verändern oder anzupassen, ohne dabei gleichzeitig die Detektion mithilfe der ersten Detektionseinrichtung zu beeinflussen, sowie die Detektion mithilfe der ersten Detektionseinrichtung anzupassen und zu verändern, ohne dabei gleichzeitig den Laserarbeitsprozess zu beeinflussen. Dadurch kann die Prozessbeobachtung mit der ersten Detektionseinrichtung in Bezug auf die jeweiligen Beobachtungsanforderungen, die sich im Prozessverlauf auch verändern können, stets optimiert sein und kann gleichzeitig der Laserprozess in Bezug auf die jeweiligen Prozessanforderungen, die auch eine Variation der Fokuslage und/oder der Fokusform während des Prozessverlaufs umfassen können, stets optimiert sein.

Durch die Entkopplung können die Fokussierungsvorrichtung und die Optikvorrichtung unabhängig voneinander gesteuert werden, sodass jeweils unterschiedliche Anforderungen unabhängig voneinander optimiert werden können. Zudem müssen die jeweiligen Steuerungen keine Beeinflussung der jeweils anderen Steuerung berücksichtigen oder kompensieren, da aufgrund der Entkopplung keine Wechselwirkung zwischen einer adaptiven Detektion mit der ersten Detektionseinrichtung und einer adaptiven Fokussierung des Arbeitsstrahls erforderlich ist. Demnach ermöglicht die erfindungsgemäße Ablenkeinheit einen flexibleren und damit effizienteren Arbeitsprozess bei einer optimierten Prozessüberwachung und zudem einen jeweils robusteren und weniger störanfälligen, zuverlässigeren und genaueren Arbeits- und Beobachtungsprozess bei gleichzeitiger Prozessausführung, die für eine effektive Prozessbeobachtung, Prozessüberwachung, Prozesskontrolle, Prozesssteuerung und/oder Prozessregelung erforderlich ist.

Vorzugsweise ist die Fokussiervorrichtung eingerichtet, die Brennweite in Abhängigkeit einer Einstellung der XY-Ablenkvorrichtung und/oder eines Arbeitsabstandes zu verändern. Dies erlaubt die Brennweite auf den jeweiligen Auslenkwinkel anzupassen, sodass ein Planfeldausgleich vorgenommen werden kann und der Fokus während des Scannens in einer Ebene gehalten werden kann. Alternativ oder zusätzlich kann durch eine Brennweitenveränderung, beispielsweise um einen vergleichsweise großen Offset-Wert, der Arbeitsabstand verändert werden.

Die Fokussiervorrichtung umfasst mehrere bewegbare Linsen oder Linsengruppen und kann dafür eingerichtet sein, eine Linse oder Linsengruppe oder mehrere der Linsen oder Linsengruppen gemeinsam entlang des Arbeitsstrahlengangs zu bewegen. Dadurch kann die Brennweite und dementsprechend die Fokuslage verändert werden. "Linsengruppe" bezieht sich hierin auf eine Reihe von dicht hintereinander angeordneten Linsen, die die gleiche Funktion wie eine entsprechende einzelne Linse erfüllen.

Erfindungsgemäß ist die Fokussiervorrichtung dazu eingerichtet, den Fokusdurchmesser des Arbeitsstrahls zu verändern, ohne dabei gleichzeitig die Fokuslage zu verändern, wobei dieses Merkmal in anderen nicht anspruchsgemäßen Ausführungsformen optional sein kann. Mit anderen Worten kann die Fokusgröße und damit die Intensität auf der jeweiligen Arbeitsfläche vergrößert oder verkleinert werden, ohne dass sich die Strahlkaustik verändert und ohne dass sich die Fokuslage verändert. Dadurch kann die jeweilige Intensität auf der Arbeitsfläche während des Scannens an unterschiedliche Bedingungen angepasst werden, ohne dass sich der Fokus von der Arbeitsfläche entfernt. Damit kann die Flexibilität und Effizienz des Laserprozesses erhöht werden.

Erfindungsgemäß umfasst die Fokussiervorrichtung mehrere, d.h. mindestens zwei, bewegbare Linsen und die Ablenkeinheit ist dafür eingerichtet, die mindestens zwei Linsen gleichzeitig unabhängig voneinander zu bewegen. Dadurch können die mindestens zwei Linsen beispielsweise gleichzeitig gegenläufig bewegt werden. Dies ermöglicht die Fokusgröße zu verändern, ohne gleichzeitig die Fokuslage zu verändern. In einigen Ausführungsformen kann die Linsenbewegung aus einer Kombination einer gegenläufigen Bewegung und einer gemeinsamen, gleichgerichteten, nicht gegenläufigen Bewegung bestehen, sodass bei einer entsprechenden Ansteuerung gleichzeitig Fokuslage und Fokusgröße verändert werden können.

In bevorzugten Ausführungsformen umfasst die Fokussiervorrichtung eine erste bewegbare Linse, eine zweite bewegbare Linse, und eine feststehende Linse, wobei die zweite bewegbare Linse in Strahlrichtung des Arbeitsstrahls nach bzw. hinter der ersten bewegbaren Linse angeordnet ist, und wobei die feststehende Linse in Strahlrichtung des Arbeitsstrahls nach bzw. hinter der ersten bewegbaren Linse und der zweiten bewegbaren Linse angeordnet ist. Es versteht sich, dass die erste und die zweite bewegbare Linse hierin jeweils durch eine erste und eine zweite bewegbare Linsengruppe gebildet sein können. Die feststehende Linse kann ebenfalls durch eine feststehende Linsengruppe gebildet sein. Daher gelten alle im Folgenden auf die erste bewegbare Linse, die zweite bewegbare Linse und die feststehende Linse beschriebenen Merkmale ebenfalls für die entsprechenden Linsengruppen, wenn diese vorhanden sind.

Die erste bewegbare Linse und die zweite bewegbare Linse können gemeinsam und gleichsinnig oder unabhängig voneinander entlang des Arbeitsstrahlengangs bewegt werden. Der Arbeitsstrahl propagiert nacheinander zunächst durch die erste bewegbare Linse, dann durch die zweite bewegbare Linse, und zuletzt durch die feststehende Linse. Die feststehende Linse dient der Fokussierung des Arbeitsstrahls auf das Arbeitsfeld. Eine oder mehrere der ersten bewegbaren Linse oder der Linsen der ersten Linsengruppe, der zweiten bewegbaren Linse oder der Linsen der zweiten Linsengruppe und der feststehenden Linse oder der Linsen der feststehenden Linsengruppe können ferner eine oder mehrere asphärische Flächen aufweisen.

Ein Abstand zwischen der objektseitigen Hauptebene der ersten bewegbare Linse und dem ersten Fenster weicht in manchen Ausführungsformen um nicht mehr als 50%, vorzugsweise nicht mehr als 30%, besonders bevorzugt nicht mehr als 10%, von der Brennweite der ersten bewegbaren Linse ab. Der Arbeitsstrahl kann mithin divergent in die Ablenkeinheit eintreten und eine Strahltaille des Arbeitsstrahls kann innerhalb des ersten Fensters liegen. Somit variiert der vorgenannte Abstand immer in einem kleinen Bereich um die Brennweite der ersten bewegbaren Linse. Damit wird erreicht, dass es zu jeder Fokuslage einen Bereich des Abbildungsmaßtabs der Fokussiervorrichtung gibt, bei der der Durchmesser des Arbeitsstrahls, d.h. die Spotgröße, auf der zweiten bewegbaren Linse ungefähr gleich groß wie oder größer als auf der ersten bewegbaren Linse ist. Da thermische Linseneffekte reziprok quadratisch mit dem Strahldurchmesser skalieren, kann somit der Einfluss der thermischen Variationen der zweiten bewegbaren Linsen auf die gesamte Fokussiervorrichtung minimiert werden, wodurch thermisch bedingte unkontrollierte Variationen der Fokuslage und des Abbildungsmaßtabs der Fokussiervorrichtung vermieden werden können.

In einigen Ausführungsformen ist der Abstand zwischen der ersten bewegbaren Linse und der zweiten bewegbaren Linse so gewählt, dass die axiale Lage eines von der ersten und der zweiten bewegbaren Linsen erzeugten virtuellen Bildes innerhalb eines Bereichs variieren kann, der dem Verstellbereich der zweiten bewegbaren Linse entspricht. Die zweite bewegbare Linse ist entlang des Arbeitsstrahlengangs innerhalb dieses Verstellbereiches bewegbar. Diese Voraussetzung kann als Untergrenze für den Abstand der ersten bewegbaren Linse und der zweiten bewegbaren Linse angesehen werden, wobei größere Abstände ebenfalls möglich sind.

Dies ermöglicht es, die Fokussierung des Arbeitsstrahls auf das Arbeitsfeld durch eine entsprechende Verschiebung der zweiten bewegbaren Linse bei gleichzeitiger Änderung des Abbildungsmaßtabs der Fokussiervorrichtung konstant zu halten. Dies kann erreicht werden, indem die zweite bewegbare Linse so positioniert wird, dass ein Abstand D zwischen einem von der ersten und der zweiten bewegbaren Linsen erzeugten virtuellen Bild des ersten Fensters bzw. der Arbeitsstrahlzuführung und der objektseitigen Hauptebene der feststehenden Linse bei einer bestimmten und gewünschten Fokuslage der Fokussiervorrichtung stets konstant bleibt. Dieser Abstand D ist (in paraxialer Näherung) von einer Distanz zwischen der bildseitigen Hauptebene der feststehenden Linse und der gewünschten Fokuslage $\Delta$ der Fokussiervorrichtung sowie von der Brennweite $f_F$ der feststehenden Linse gemäß der Abbildungsgleichung gegeben:

$$\frac{1}{D} + \frac{1}{\Delta} = \frac{1}{f_F}.$$

In manchen Ausführungsformen weisen die erste bewegbare Linse, die zweite bewegbare Linse und die feststehende Linse jeweils eine positive Brennweite, eine negative Brennweite und eine positive Brennweite auf. Somit kann der Arbeitsstrahl von der ersten bewegbaren Linse kollimiert werden. Der Arbeitsstrahl kann nach Durchgang durch die erste bewegbare Linse je nach Abstand zwischen der ersten bewegbaren Linse und dem ersten Fenster konvergent oder divergent sein.

Gemäß bevorzugten Ausführungsformen sind die Brennweiten und die Lagen der ersten bewegbaren Linse und der zweiten bewegbaren Linse so gewählt, dass die Fokussiervorrichtung keinen Fokus aufweist, der zwischen der ersten bewegbaren Linse und der feststehenden Linse liegt. Somit weist die Fokussiervorrichtung abgesehen von dem Arbeitsstrahleintritt selber und dem Fokus auf dem Arbeitsfeld keinen weiteren Fokus auf.

Der Abstand zwischen der ersten bewegbaren Linse und dem ersten Fenster kann durch Verschiebung der ersten bewegbaren Linse entlang des Arbeitsstrahlengangs verkleinert werden, so dass der Arbeitsstrahl zwischen der ersten bewegbaren Linse und der zweiten bewegbaren Linse divergent ist und der Abbildungsmaßtab, und damit der Fokusdurchmesser oder die Spotgröße des Arbeitsstrahls abnimmt. Durch Vergrößern des Abstandes zwischen der ersten bewegbaren Linse und des ersten Fensters kann alternativ erreicht werden, dass der Arbeitsstrahl zwischen der ersten bewegbaren Linse und der zweiten bewegbaren Linse konvergent ist, und dass der Abbildungsmaßtab und damit der Fokusdurchmesser des Arbeitsstrahls zunimmt.

Gleichzeitig zu einer solchen Verschiebung der ersten bewegbaren Linse zur Steuerung des Abbildungsmaßtabs der Fokussiervorrichtung kann auch die Fokuslage der Fokussiervorrichtung durch eine entsprechende Verschiebung der zweiten bewegbaren Linse angepasst werden, sodass die Fokussiervorrichtung auf dem Arbeitsfeld fokussiert bleibt. Die erfindungsgemäße Ablenkeinheit gestattet es, jede mögliche Kombination des Abbildungsmaßtabs und des Fokusabstands innerhalb vorbestimmter Bereiche durch Anpassung der Positionen der ersten bewegbaren Linse und der zweiten bewegbaren Linse zu erreichen. Somit kann der Arbeitsstrahl stets auf das Arbeitsfeld fokussiert bleiben. Ferner kann die Strahlintensität des Arbeitsstrahls, die von dem Fokusdurchmesser bestimmt ist, bei unterschiedlichen Auslenkwinkeln, die bei einem flachen Arbeitsfeld unterschiedlichen Arbeitsabständen entsprechen, ebenfalls konstant bleiben.

Erfindungsgemäß umfasst die Ablenkeinheit ferner eine Steuereinheit, die dazu eingerichtet ist, Verschiebungen der ersten bewegbaren Linse und der zweiten bewegbaren Linse entlang des Arbeitsstrahlengangs anzusteuern. Die Steuereinheit ist erfindungsgemäß dazu eingerichtet, die Brennweite der Fokussiervorrichtung als Ganzes in Abhängigkeit einer Einstellung der XY-Ablenkvorrichtung anzupassen. Die Steuereinheit kann ferner dazu eingerichtet sein, die Brennweite der Fokussiervorrichtung als Ganzes in Abhängigkeit eines Arbeitsabstandes anzupassen. Die Steuereinheit kann ferner einen oder mehrere Antriebe umfassen, die zur Steuerung und Regelung der axialen Positionen jeweils der ersten bewegbaren Linse und der zweiten bewegbaren Linse eingerichtet sind. Dies ermöglicht eine partiell- oder vollautomatisierte Steuerung der ersten und zweiten bewegbaren Linsen. Die Steuereinheit kann ebenfalls zur vollautomatisierten Steuerung der Fokussierung der Ablenkeinheit mit einer Detektionseinrichtung verbunden sein.

In manchen Ausführungsformen umfasst die Ablenkeinheit einen oder mehrere Schiebemechanismen, die zur manuellen Verschiebung der ersten bewegbaren Linse und/oder der zweiten bewegbaren Linse entlang des Arbeitsstrahlengangs eingerichtet sind. Die Schiebemechanismen gestatten eine manuelle Einwirkung auf die Positionierung der ersten und/oder der zweiten bewegbaren Linsen und ermöglichen es, einen von der Steuereinheit abgedeckten Verstellbereich der ersten und/oder der zweiten bewegbaren Linse zu erweitern. Somit kann eine größere Varianz an möglichen Fokuslagen und Abbildungsmaßstäben der Fokussiervorrichtung erreicht werden.

In weiterer bevorzugten Ausführungsformen kann das optische Element eine oder mehrere der folgenden optischen Eigenschaften besitzen: Einen Reflexionsgrad von ≥ 80%, vorzugsweise ≥ 90%, besonders vorzugsweise ≥ 99% für eine Arbeitswellenlänge, insbesondere eine Wellenlänge zwischen 1020 nm und 1080 nm, einen Transmissionsgrad von ≥ 20%, vorzugsweise ≥ 70%, besonders vorzugsweise ≥ 90% für Wellenlängen zwischen 400 nm bis 900 nm, und einen Transmissionsgrad von >20%, vorzugsweise >70%, besonders vorzugsweise >90% für Wellenlängen zwischen 1300 nm bis 2100 nm. Dadurch ist es möglich einen hochenergetischen Arbeitsstrahl mit der Arbeitswellenlänge ausschließlich oder nahezu ausschließlich reflektierend durch die Ablenkeinheit zu leiten, sodass keine oder wenig Absorptionswärme in der Ablenkeinheit entsteht. Wenig energetische Detektionsstrahlen mit Wellenlängenspektren im Bereich 1300 nm bis 2100 nm, d.h. oberhalb einer möglichen Arbeitswellenlänge zwischen 1020 und 1080 nm, und im Bereich 400 nm bis 900 nm, d.h. unterhalb einer möglichen Arbeitswellenlänge zwischen 1020 und 1080 nm einschließlich von möglichen Beleuchtungsstrahlen bei beispielsweise 850 nm, können dagegen durch das optische Element transmittiert werden und dadurch räumlich vom Arbeitsstrahl getrennt werden. Der oben genannte Arbeitswellenlängenbereich (Reflexionsbereich) ist besonders vorteilhaft für die Materialbearbeitung. Die Wellenlängenbereiche für mögliche Detektionsstrahlen (Transmissionsbereiche) erlauben eine umfängliche Auswertung von Detektionsstrahlen, die auf der Arbeitsfläche entstehen und/oder die von der Arbeitsfläche reflektiert werden.

Gemäß einer vorteilhaften Ausführungsform der erfindungsgemäßen Ablenkeinheit ist das optische Element geneigt im Detektionsstrahlengang angeordnet und ist weiterhin ein optisches Kompensationselement im Detektionsstrahlengang zwischen dem optischen Element und der ersten Detektionseinrichtung angeordnet, das eine optische Verzerrung, insbesondere eine Aberration und/oder ein Astigmatismus, aufgrund einer Transmission durch das geneigte optische Element zumindest teilweise kompensiert. Aufgrund der Transmissions- und Reflexionseigenschaften des optischen Elementes und der Neigung des optischen Elementes können die Detektionsstrahlen vom Arbeitsstrahl getrennt werden. Die Transmission durch ein geneigtes, d.h. nicht rechtwinklig zum Strahl stehendes, optisches Element kann jedoch zu einer optischen Verzerrung oder einem Astigmatismus führen, der zu einer unscharfen oder ungenauen Detektion mit der ersten Detektionseinrichtung führen kann. Durch die Kompensation kann dieser Abbildungsfehler direkt kompensiert oder zumindest verringert werden. Wenn die Detektionseinrichtung beispielsweise eine Kamera ist, kann dadurch die räumliche Auflösung der Abbildung verbessert werden und kann eine nachträgliche elektronische Korrektur vermieden werden. Aber auch bei anderen Detektionseinrichtungen, beispielsweise bei einem optischen Kohärenztomograph, kann die Detektionsgenauigkeit und/oder -Empfindlichkeit erheblich gesteigert werden. Dies ermöglicht eine weitere Verbesserung der Prozesseffizienz, -genauigkeit und -zuverlässigkeit.

In einigen Ausführungsformen ist das optische Element durch eine erste planparallele Platte gebildet und ist das Kompensationselement durch eine zweite planparallele Platte gebildet und sind beide Platten zum Detektionsstrahlengang geneigt. Dies ermöglicht eine besonders einfache, unkomplizierte, genaue, passive und schnelle Kompensation.

In bevorzugten Ausführungsformen umfasst die Ablenkeinheit eine Optikvorrichtung, die für eine Anpassung der Kollimation, der Fokussierung oder einer Strahlaufweitung in Abhängigkeit einer Einstellung der XY-Ablenkvorrichtung und/oder eines Arbeitsabstandes eingerichtet bzw. dafür ansteuerbar ist. Dadurch können Arbeitsbereiche, d.h. abgebildete Ausschnitte der Arbeitsfläche am Ort des Laserprozesses, deren Detektionsstrahlen aufgrund unterschiedlicher Auslenkwinkel und/oder aufgrund unterschiedlicher Arbeitsabstände unterschiedlich lange Wege bis zur Detektion mit der ersten Detektionseinrichtung zurücklegen, gleichermaßen genau und empfindlich detektiert und beobachtet werden. Dies ermöglicht eine flexible, vielseitige und genaue Beobachtung.

Gemäß einigen Ausführungsformen sind die Ablenkeinheiten für eine Bearbeitung mit einem Arbeitsabstand oder Arbeitsabständen zwischen 238 mm und 850 mm, vorzugsweise zwischen 238 mm und 671 mm, besonders bevorzugt zwischen 300 mm und 548 mm eingerichtet. Der Arbeitsabstand entspricht dem Abstand zwischen Austritts- bzw. Eintrittsfläche des zweiten Fensters und einer ebenen Arbeitsfläche unter dem zweiten Fenster, bei dem in Betriebsausrichtung der Ablenkeinheit ein ebenes Arbeitsfeld in der Arbeitsfläche mit der Ablenkeinheit bearbeitet und beobachtet werden kann. "Bearbeitet werden können" setzt voraus, dass die Ablenkeinheit den Arbeitsstrahl auf dem gesamten ebenen Arbeitsfeld fokussieren kann. "Beobachtet werden können" setzt voraus, dass die Ablenkeinheit jeden Arbeitsbereich innerhalb des Arbeitsfelds, welcher dem Sichtfeld der ersten Detektionseinrichtung entspricht, mit der ersten Detektionseinrichtung detektieren kann bzw. auf eine Detektionsfläche der ersten Detektionseinrichtung abbilden kann.

In einigen oder mehreren der zuvor genannten Ausführungsformen weisen die Ablenkeinheiten ein Arbeitsfeld der Größe 200x200 mm² bis 600x600 mm², vorzugsweise bis $500\times500$ mm² auf. Das Arbeitsfeld entspricht einem planaren Bereich, der für die Bearbeitung mit der Ablenkeinheit im jeweiligen Arbeitsabstand zur Verfügung steht und den die Ablenkeinheit mit dem Fokus des Arbeitsstrahls abscannen kann. Das Arbeitsfeld kann für verschiedene Arbeitsabstände unterschiedlich groß sein.

Vorzugsweise ist die erfindungsgemäße Ablenkeinheit so bemessen und ausgelegt, dass in Betriebsausrichtung ihre Projektionsfläche auf die Ebene des Arbeitsfelds auf mindestens einer Seite, auf mindestens zwei Seiten, auf mindestens drei Seiten und/oder auf vier Seiten über das Arbeitsfeld hinausragt. Mit anderen Worten kann das Arbeitsfeld nur teilweise über den "Footprint" hinausreichen oder auch vollständig in diesem enthalten sein. Auf jeder Seite, auf der das Arbeitsfeld über den Footprint hinausragt, kann das Arbeitsfeld, das beispielsweise rechteckig oder quadratisch sein kann, mit einem Arbeitsfeld einer anderen Ablenkeinheit nahtlos kombiniert werden, wenn die Ablenkeinheiten entsprechend nebeneinander angeordnet werden. Dies ist besonders vorteilhaft für ein parallelisiertes Prozessieren, wodurch die Produktionszeit weiter verkürzt werden kann und eine Massenfertigung begünstigt wird.

Einige der zuvor genannten Ablenkeinheiten können auch so bemessen und ausgelegt sein, dass vier dieser Ablenkeinheiten so angeordnet werden können, dass sich für ein oder mehrere Arbeitsabstände ihre Arbeitsfelder zu einem nicht unterbrochenen ebenen Gesamtarbeitsfeld der 3,5-fachen bis 4-fachen Größe der Einzelarbeitsfelder zusammenfügen. Bei einer laserbasierten additiven Fertigung erlaubt dies die Herstellung von bis zu viermal größeren Bauteilen.

Alternativ, können einige der zuvor genannten Ablenkeinheiten auch so bemessen und ausgelegt sein, dass vier dieser Ablenkeinheiten so angeordnet werden, dass sich für ein oder mehrere Arbeitsabstände ihre Arbeitsfelder zu einem nicht unterbrochenen ebenen Gesamtarbeitsfeld zusammenfügen, das kleiner als ein einzelnes Arbeitsfeld ist. So kann die Größe des Gesamtarbeitsfeldes bei einer 100% Überlappung der jeweiligen Arbeitsfelder beispielsweise 2/3 der Größe eines einzelnen Arbeitsfeldes betragen. Bei einer laserbasierten additiven Fertigung erlaubt dies die Produktionszeit bis um das 4-fache zu verringern. Dies kann ermöglichen, die gewohnt hohen Ausstoßraten von etablierten Verfahren, wie zum Beispiel dem Gießen, tendenziell zu erreichen oder langfristig sogar einzustellen.

Gemäß einiger Ausführungsformen können die Ablenkeinheiten auch so bemessen und ausgelegt sein, dass zwei dieser Ablenkeinheiten so angeordnet werden können, dass sich ihre Arbeitsfelder auf einem gemeinsamen Arbeitsfeld überlagern, wobei das gemeinsame Arbeitsfeld eine Fläche aufweist, die mindestens 50%, vorzugsweise mindestens 60%, besonders vorzugsweise mindestens 70% der Fläche eines jeweiligen Einzelarbeitsfeldes beträgt. Demnach müssen parallel arbeitende Ablenkeinheiten nicht notwendigerweise parallel auf jeweils eigenen aneinander angrenzenden Arbeitsfeldern arbeiten, sondern können auch parallel auf einem gemeinsamen Arbeitsfeld oder einem gemeinsamen Teil eines Arbeitsfeldes arbeiten. Dadurch kann die Prozesseffizienz weiter gesteigert werden und auch die Qualität der Bauteile verbessert werden, beispielsweise wenn eine der parallel arbeitenden Ablenkeinheiten zur Korrektur der Fehler der anderen Ablenkeinheit verwendet wird.

In einigen Ausführungsformen umfasst die Ablenkeinheit eine erste Detektionseinrichtung, die eine Kamera ist oder umfasst. Diese Ausführungsformen umfassen eine Abbildungsoptik zum Abbilden des Arbeitsbereichs auf die Kamera, wobei die Abbildungsoptik die vorgenannte Optikvorrichtung umfasst. In diesen Ausführungsformen ist die Optikvorrichtung eingerichtet, die Brennweite der Abbildungsoptik zu verändern. Dadurch kann der Prozess visuell beobachtet und überwacht werden.

Bei den vorgenannten Ausführungsformen kann das Abbildungsverhältnis aus der auf die Kamera abgebildeten Fläche des Arbeitsbereichs im Arbeitsabstand und der Fläche des Kamerachips zwischen 1,7 und 0,5, vorzugsweise 0,8 betragen. Diese Verhältnisse erlauben einen besonders vorteilhaften Kompromiss zwischen einer erforderlichen Ortsauflösung für eine ausreichend genaue Prozessüberwachung, einer möglichst kleinen Pixelanzahl der Kamera für ein ausreichend schnelles Auslesen, einem größerem Kamerachip (Abbildung im Bereich 1:1) für eine gute Lichtstärke bzw. -ausbeute, einem ausreichend großen Sichtfeld der Kamera auf der Arbeitsfläche zum Überwachen eines ausreichend großen Arbeitsbereichs und einer möglichst kurzen Abbildungsweglänge für eine kompakte Bauform der Ablenkeinheit.

In einigen vorteilhaften Ausführungsformen besitzt die Kamera einen Chip der Größe 2/3" bzw. 8,8 mm $\times$ 6,6 mm, der insbesondere $1280 \times 1024$ Pixel aufweist, und hat die abgebildete Fläche des Arbeitsbereichs, der dem Kamerasichtfeld im Arbeitsabstand entspricht, eine Größe zwischen 8 mm $\times$ 6 mm und 14 mmx 10,5 mm. Diese Chipgröße gestattet eine ausreichend hohe Bildrate bzw. Zeitauflösung der Überwachung. Zudem ist die abgebildete Fläche ausreichend groß für eine Prozessbeurteilung und wird eine ausreichend große optische bzw. räumliche Auflösung ermöglicht.

In einigen der zuvor genannten Ausführungsformen beträgt eine Abbildungsweglänge, welche die Detektions- oder Bildstrahlen vom Eintritt in die Abbildungsoptik bis zum Kamerachip durchlaufen, zwischen 400 mm und 700 mm, vorzugsweise zwischen 420 mm und 600 mm, besonders vorzugsweise zwischen 450 mm und 510 mm, insbesondere 480 mm. Solche Weglängen ermöglichen einen vergleichsweise kompakten Aufbau und dabei gleichzeitig einen optimalen Kompromiss zwischen räumlicher Auflösung (die mit dem Abbildungsverhältnis, Schärfe bzw. Grad der Verzerrungsfreiheit, Anzahl der Pixel zusammenhängt), Schnelligkeit bzw. Bildrate (die mit der Pixelanzahl zusammenhängt), Größe der abgebildeten Fläche (die mit dem Abbildungsverhältnis, der Chipgröße zusammenhängt) und einer möglichst wenig komplexen Abbildungsoptik (Anzahl und Art der Linsen), die damit vergleichsweise robust und kostengünstig sein kann. Ein kompakter Aufbau ist besonders vorteilhaft für parallelisierte Laserprozesse, d.h. die Fertigung oder Bearbeitung eines Bauteils gleichzeitig mithilfe mehrerer Laserstrahlen und Ablenkeinheiten, weil die Ablenkeinheiten dichter nebeneinander angeordnet werden können, so dass sich ihre Arbeitsfelder teilweise überschneiden oder aneinander angrenzen.

In einer oder mehreren der zuvor genannten Ausführungsformen gestattet die Kamera eine Bildaufnahmerate von ≥ 500 Hz, vorzugsweise ≥ 1 kHz, besonders vorzugsweise ≥ 1,5 kHz, insbesondere ≥ 2 kHz. Dadurch kann der Prozess mit einer hohen Zeitauflösung beobachtet und untersucht werden, sodass auch kleinste Fehler detektiert, untersucht und gegebenenfalls korrigiert werden können.

Weiterhin kann die erfindungsgemäße Ablenkeinheit eine Beleuchtungseinrichtung umfassen, die angeordnet und ausgerichtet ist, um das gesamte Arbeitsfeld gleichzeitig mit der zweiten Wellenlänge zu beleuchten, insbesondere mit einer Homogenität ≥ 80% zu beleuchten. Dadurch müssen die Beleuchtungsstrahlen nicht gescannt werden, so dass in Richtung auf das Arbeitsfeld und in Bezug auf das Arbeitsfeld statisch beleuchtet werden kann. Im Vergleich zu einer gescannten Beleuchtung kann der Prozess in diesen Ausführungsformen eine hohe Zuverlässigkeit und Robustheit aufweisen. Zudem kann mit einer vergleichsweise großen Homogenität beleuchtet werden, so dass für unterschiedliche Bereiche einheitliche Abbildungsbedingungen bestehen.

In den vorgenannten Ausführungsformen kann die Beleuchtungseinrichtung auch für eine geblitzte Beleuchtung eingerichtet sein. Dadurch kann die Lichtintensität erhöht werden und kann bei erhöhter Lichtintensität eine längere Lebensdauer der Lampen ermöglicht werden.

In einigen Ausführungsformen ist die Beleuchtung derart geblitzt, dass die Bildaufnahmen der Kamera jeweils während eines Beleuchtungsblitzes erfolgen und die Blitzdauer größer als die Bildeinzugsdauer der Kamera ist oder dieser entspricht. Dadurch kann sichergestellt werden, dass das auch bei der Abbildung eines nur kleinen Ausschnitts aus dem gesamten beleuchteten Feld ausreichend Lichtintensität für die Bildaufnahme zur Verfügung steht.

Vorzugsweise ist die Aus-Zeit der Beleuchtung größer als die An-Zeit der Beleuchtung oder entspricht dieser. Dadurch kann ein zu starkes Aufheizen vermieden werden, wodurch die Lebensdauer und die Prozessgenauigkeit und -zuverlässigkeit erhöht werden können.

Einige der zuvor genannten Ausführungsformen umfassen weiterhin einen Framegrabber, an den die Kamera angeschlossen ist. Der Framegrabber erlaubt ein schnelleres Auslesen und weiterverarbeiten der Kamerabilder, wodurch die Prozessüberwachung weiter verfeinert und verbessert werden kann und dementsprechend auch die Prozesseffizienz gesteigert werden kann.

In einigen alternativen Ausführungsformen ist die erste Detektionseinrichtung ein optischer Kohärenztomograph (optical coherence tomograph, OCT) oder umfasst einen solchen. Der optische Kohärenztomograph gestattet eine Detektion und Beobachtung von bestehenden Höhenunterschieden und/oder von Höhenunterschieden, die während des Prozesses bzw. aufgrund des Prozesses entstehen. Dies ist eine Alternative zur Prozessüberwachung mittels Kamera. In anderen Ausführungsformen kann die erste Detektionseinrichtung auch andere Detektionseinrichtungen umfassen, die vorteilhaft mit der anpassbaren Optikvorrichtung betrieben werden können.

Einige der zuvor genannten Ausführungsformen der erfindungsgemäßen Ablenkeinheit umfassen weiterhin ein zweites optisches Element und eine zweite Detektionseinrichtung, wobei das zweite optische Element im Detektionsstrahlengang zwischen dem optischen Element und der ersten Detektionseinrichtung angeordnet ist, die zweite Wellenlänge zur Weiterleitung an die erste Detektionseinrichtung zumindest teilweise reflektiert und andere Wellenlängen zur Weiterleitung an die zweite Detektionseinrichtung zumindest teilweise transmittiert. Dadurch kann neben der direkten Beobachtung und Überwachung mittels der ersten Detektionseinrichtung eine weitere Prozessüberwachung lückenlos über die Produktionszeit durchgeführt werden, die zusätzliche Informationen liefern kann bzw. andere Prozessparameter überwachen kann. Ein steuernder oder regelnder Prozesseingriff auf Basis dieser erweiterten Überwachung kann damit zu einer weiteren Verbesserung der Prozesseffizienz und -qualität beitragen.

Das zweite optische Element kann eine oder mehrere der folgenden optischen Eigenschaften besitzen: Einen Reflexionsgrad von ≥ 80%, vorzugsweise ≥ 90%, besonders vorzugsweise ≥ 95% für eine Beleuchtungswellenlänge zwischen 630 nm und 670 nm oder zwischen 820 nm und 870 nm, vorzugsweise bei einem Einfallswinkel von 45°, einen Transmissionsgrad von >20%, vorzugsweise >70%, besonders vorzugsweise >90% für Wellenlängen zwischen 400 nm bis 700 nm, einen Transmissionsgrad von >20%, vorzugsweise >70%, besonders vorzugsweise >90% für Wellenlängen zwischen 1300 nm bis 2100 nm. Die vorgenannten spektral ausgedehnten Transmissionsbereiche des ersten und zweiten optischen Elements, ermöglichen neben der Beobachtung mit der ersten Detektionseinrichtung eine weitere parallel durchgeführte Beobachtung lokal bei bestimmten Wellenlängen oder integrativ über einen oder mehrere größere Wellenlängenbereiche, wie beispielsweise das integrative Verfahren einer Lichtintensitätsmessung mittels Fotodiode.

Die zweite Detektionseinrichtung kann eine Fotodiode, ein Pyrometer, eine zweite Kamera, vorzugsweise eine VIR Kamera und/oder Multispektralkamera zur Erstellung einer Strahlungs- und/oder Wärmekarte (heatmap generation), einen thermischen Bildsensor und/oder einen optischen Kohärenztomograph umfassen.

Die erfindungsgemäße Ablenkeinheit und ihre vorgenannten Ausführungsformen eignen sich besonders gut zur additiven Fertigung, insbesondere zur "Direct Powder Fusion", Vat Photopolimerisation und/oder "Direct Energy Deposition". Diese Prozesse schließen auch ein Selective Laser Melting (SLM) und eine Laser Metal Deposition (LMD) ein. Sie können aber auch für andere Anwendungen verwendet werden. Die vorliegende Erfindung ist nicht auf diese Anwendungen beschränkt.

Die vorliegende Erfindung betrifft weiterhin eine Verwendung einer Ablenkeinheit gemäß einer oder mehrerer der zuvor genannten Ausführungsformen zur additiven Fertigung, insbesondere zur "Direct Powder Fusion", Vat Photopolimerisation und/oder "Direct Energy Deposition".

KURZBESCHREIBUNG DER FIGUREN

Weitere Vorteile und Merkmale der vorliegenden Erfindung werden in der folgenden Beschreibung anhand der beigefügten Figuren näher erläutert.

Fig. 1    zeigt den schematischen Aufbau einer Ablenkeinheit gemäß einer erfindungsgemäßen Ausführungsform.

Fig. 2    zeigt den detaillierten Aufbau der Fokussiervorrichtung der Ablenkeinheit der Fig. 1.

Fig. 3    zeigt eine Ablenkeinheit gemäß einer weiteren erfindungsgemäßen Ausführungsform.

Fig. 4    zeigt eine Ablenkeinheit gemäß einer weiteren erfindungsgemäßen Ausführungsform.

Fig. 5    zeigt eine Außenansicht einer Ablenkeinheit gemäß einer erfindungsgemäßen Ausführungsform.

Fig. 6    zeigt eine schematische Draufsicht auf eine Anordnung von vier Ablenkeinheiten gemäß einer erfindungsgemäßen Ausführungsform für eine parallelisierte Fertigung.

Fig. 7    zeigt eine schematische Draufsicht auf eine Anordnung von zwei Ablenkeinheiten gemäß einer erfindungsgemäßen Ausführungsform für eine parallelisierte Fertigung.

In den Figuren sind gleiche Merkmale mit gleichen Bezugszeichen versehen.

AUSFÜHRLICHE BESCHREIBUNG BEISPIELHAFTER AUSFÜHRUNGSFORMEN

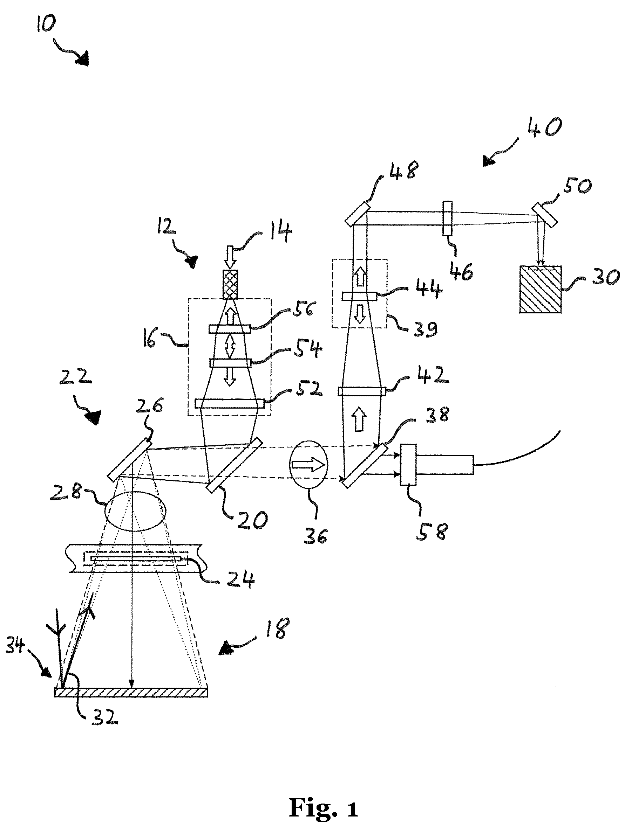

Figur 1 zeigt einen schematischen Aufbau einer Ablenkeinheit 10 gemäß einer erfindungsgemäßen Ausführungsform. Die Ablenkeinheit 10 umfasst ein erstes Fenster 12 durch das ein optischer Arbeitsstrahl 14 in die Ablenkeinheit 10 eintreten kann. Das erste Fenster 12 ist innerhalb eines faseroptischen Verbinders angeordnet, über den ein Faserlaser oder eine faseroptische Verbindung an die Ablenkeinheit 10 angeschlossen werden kann. In anderen Ausführungsformen kann der Arbeitsstrahl 14 als Freistrahl in die Ablenkeinheit 10 eintreten, ohne dass ein faseroptischer Verbinder vorgesehen ist.

Die Ablenkeinheit 10 umfasst weiterhin eine Fokussiervorrichtung 16, um den Arbeitsstrahl 14 auf einer Arbeitsfläche 18 zu fokussieren, ein optisches Element 20, um den Arbeitsstrahl 14 zu reflektieren, eine XY-Ablenkvorrichtung 22, um den Arbeitsstrahl über die Arbeitsfläche 18 zu scannen, und ein zweites Fenster 24, durch das der Arbeitsstrahl aus der Ablenkeinheit 14 austreten kann. Die vorgenannten Elemente 16, 20, 22, 24 sind entlang eines Arbeitsstrahlengangs in der Ablenkeinheit 10 angeordnet und werden in der vorgenannten Reihenfolge von einem Arbeitsstrahl 14, der in die Ablenkeinheit 10 eintritt, durchlaufen bzw. sie reflektieren den Arbeitsstrahl 14 in der vorgenannten Reihenfolge.

Die XY-Ablenkvorrichtung 22 umfasst einen ersten Scanspiegel 26 und einen zweiten Scanspiegel 28, die dazu eingerichtet sind, den Arbeitsstrahl 14 in eine X-Richtung bzw. in eine Y-Richtung abzulenken und zu scannen.

Weiterhin umfasst die Ablenkeinheit 10 eine erste Detektionseinrichtung in Form einer Kamera 30, die innerhalb der Ablenkeinheit 10 angeordnet ist, um Detektions- oder Bildstrahlen 32, die von einem Arbeitsbereich 34 innerhalb der Arbeitsfläche 18 reflektiert werden, zu detektieren. Die detektierten Bildstrahlen 32 durchlaufen von der Arbeitsfläche 18 bis zur Kamera 30 einen Detektions- oder Bildstrahlengang, auf dem die Bildstrahlen 32 der Reihe nach die folgenden Elemente durchlaufen oder von diesen reflektiert werden: Das zweite Fenster 24, die XY-Ablenkvorrichtung 22, das optische Element 20, ein Kompensationselement 36, ein zweites optisches Element 38, sowie eine Optikvorrichtung 39. Die Optikvorrichtung 39 ist Teil einer Abbildungsoptik 40. Die Optikvorrichtung 39 ist dazu eingerichtet die Brennweite der Abbildungsoptik 40 zu verändern.

In manchen Ausführungsformen ist die Optikvorrichtung 39 eine Kollimationsvorrichtung, die sicherstellt, dass die Bildstrahlen 32 an einer bestimmten Stelle im Bildstrahlengang kollimiert zwischen der Vorrichtung 39 und der der Kamera 30 bei unterschiedlichen Bildabstanden sind. In anderen Ausführungsformen müssen die Bildstrahlen 32 aber nicht oder nicht überall zwischen der Vorrichtung 39 und der Kamera 30 kollimiert sein. Aufgrund einer Anpassbarkeit, Einstellbarkeit oder Veränderbarkeit der Vorrichtung 39 ist diese variabel bzw. veränderbar und kann eine Kollimation, Aufweitung und/oder Fokussierung der Bildstrahlen 32 zwischen der Vorrichtung 39 und der der Kamera 30 bei einem sich verändernden Bildabstand konstant gehalten werden.

Das zweite Fenster 24 kann eine für den Arbeitsstrahl 14 und für die Bildstrahlen 32 transparente Scheibe umfassen. Diese kann den Innenraum der Ablenkeinheit 10 vor einer Verschmutzung oder Verunreinigung schützen und zudem eine Wärmeisolierung bieten, um einen zu starken Wärmeeintrag von der Arbeitsfläche 18 in die Ablenkeinheit 10 zu verhindern. In anderen Ausführungsformen, kann das zweite Fenster 24 auch eine Öffnung ohne Material darin umfassen, durch die eine Luft- oder Fluidverbindung zwischen dem Innenraum und dem Außenraum der Ablenkeinheit 10 hergestellt wird.

In der Ausführungsform der Figur 1 umfasst die Abbildungsoptik 40, wie in Figur 1 dargestellt ist, zwei Linsen 42, 46, die Optikvorrichtung 39, welche eine weitere Linse 44 umfasst, und zwei Umlenkspiegel 48, 50, um den Arbeitsbereich 34 über eine Abbildungsweglänge der Abbildungsoptik 40 auf einen Chip der Kamera 30 abzubilden. Die Abbildungsweglänge ist definiert durch die optische Weglänge, welche die Bildstrahlen 32 vom Eintritt in die Abbildungsoptik 40 bis zum Auftreffen auf den Chip der Kamera 30 zurücklegen. In Figur 1 entspricht die Abbildungsweglänge dem optischen Weg, welche die Bildstrahlen von der Eintrittslinse 42 bis zum Kamerachip durchlaufen. Es wird darauf hingewiesen, dass in anderen Ausführungsformen die Abbildungsoptik 40 einen anderen Aufbau haben kann, und insbesondere mehr oder weniger Linsen und/oder Spiegel umfassen kann, die anders angeordnet sein können, als es in Figur 1 dargestellt ist.

In der Ablenkeinheit 10 wird die veränderbare Brennweite der Abbildungsoptik 40 durch eine Bewegbarkeit der Linse 44 erreicht. Die Linse 44 ist Teil der Optikvorrichtung 39, die beispielsweise eine Hochgeschwindigkeits-Kollimations-, -Aufweitungs- oder-Fokussiervorrichtung sein kann. Die Linse 44 kann mit hoher Geschwindigkeit entlang der Richtung der Bildstrahlen 32 am Ort der Linse 44 hin und her bewegt werden. Dadurch ist auch bei schneller Änderung der Weglänge vom Arbeitsbereich 34 zur Kamera 30 für die Bildstrahlen 32 während des Scannens und bei gleichzeitig hoher Zeitauflösung der Überwachung eine gleichbleibend scharfe Abbildung möglich.

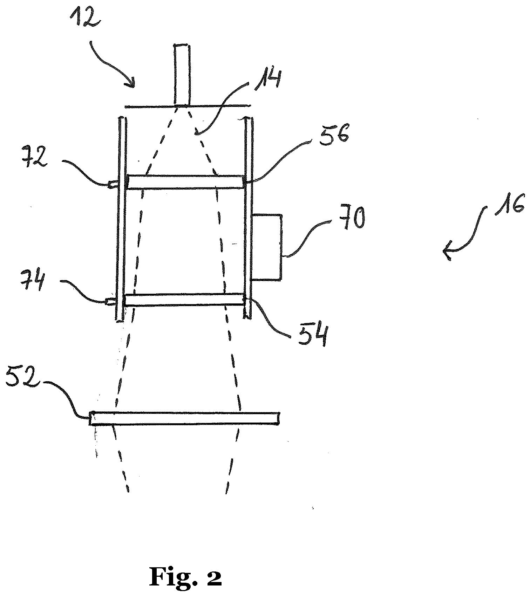

Die Fokussiervorrichtung 16, die in der Fig. 2 in größerer Detail gezeigt wird, umfasst ebenfalls eine veränderbare Brennweite. In der Ausführungsform der Figuren 1 und 2 umfasst die Fokussiervorrichtung eine feststehende Linse 52 zur Fokussierung des Arbeitsstrahls 14, eine erste bewegbare Linse 56 und eine zweite bewegbare Linse 54. Die Fokussiervorrichtung 16 kann so angesteuert werden, dass sich die erste bewegbare Linse 56 und die zweite bewegbare Linse 54 unabhängig voneinander entlang des Arbeitsstrahlengangs bewegen. Ferner können sich die erste bewegbare Linse 56 und die zweite bewegbare Linse 54 gemeinsam und gleichsinnig entlang des Arbeitsstrahlengangs bewegen. Dadurch wird die Brennweite für den Arbeitsstrahl 14 verändert, d.h. die Entfernung des Fokus des Arbeitsstrahls 14 vom Reflexionspunkt des zweiten Scanspiegels 28 verändert sich. Dies ist besonders vorteilhaft, weil sich beim Scannen des Arbeitsstrahls 14 über die Arbeitsfläche 18 der Abstand vom jeweiligen Arbeitsbereich 34 zur XY-Ablenkvorrichtung 22 und damit die optische Weglänge, welche der Arbeitsstrahl 14 von der Fokussiervorrichtung 16 bis zum jeweiligen Arbeitsbereich 34 zurücklegt, verändert. Über eine Veränderung der Brennweite kann diese Veränderung der optischen Weglänge ausgeglichen werden, sodass sichergestellt werden kann, dass der Arbeitsstrahl 14 während des gesamten Scanvorgangs auf der Arbeitsfläche 18 fokussiert bleibt. Bei einem ebenem Arbeitsfeld 18, spricht man auch von einem "Planfeldausgleich". Zudem ermöglicht die veränderbare Brennweite eine Anpassung an unterschiedliche Arbeitsabstände zwischen der Arbeitsfläche 18 und der Ablenkeinheit 10.

Die zweite bewegbare Linse 54 ist in Strahlrichtung des Arbeitsstrahls 14 nach bzw. hinter der ersten bewegbaren Linse 56 angeordnet und die feststehende Linse 52 ist in Strahlrichtung des Arbeitsstrahls 14 nach der ersten und der zweiten bewegbaren Linsen 54, 56 angeordnet . Über die Wahl der feststehenden Linse 52 zur Fokussierung kann derjenige Bereich bestimmt werden, innerhalb dessen der Arbeitsabstand einstellbar ist und für den die Ablenkeinheit 10 ausgelegt ist. Wenn die feststehende Linse 52 eine kürzere Brennweite hat, dann ist der Arbeitsabstand um einen kürzeren mittleren Arbeitsabstand herum einstellbar, und umgekehrt. Der Arbeitsabstandsbereich entspricht dem Bereich der Abstände zwischen der Ebene des zweiten Fensters 24 und der Arbeitsfläche 18, für den der Arbeitsstrahl 14 auf einem zugehörigen Arbeitsfeld innerhalb der Arbeitsfläche 18 fokussiert werden kann und für den über die jeweiligen Bildstrahlen 32 vom Arbeitsfeld einer Abbildung in die Ebene des Chips der Kamera 30 vorgenommen werden kann. Die Größe des Arbeitsfeldes ergibt sich aus dem jeweiligen Arbeitsabstand und dem Winkelbereich, innerhalb dessen der Arbeitsstrahl 14 mithilfe der XY-Ablenkvorrichtung 22 abgelenkt werden kann.

Wie in der Fig. 2 gezeigt, umfasst die Fokussiervorrichtung 16 der dargestellten Ausführungsform der erfindungsgemäßen Ablenkeinheit eine Steuereinheit 70, die dazu eingerichtet ist, die Verschiebung der ersten bewegbaren Linse 56 und der zweiten bewegbaren Linse 54 entlang des Arbeitsstrahlengangs anzusteuern. Zudem umfasst die Fokussiervorrichtung 16 einen ersten manuellen Schiebemechanismus 72 und einen zweiten manuellen Schiebemechanismus 74, die jeweils zur manuellen Verschiebung der ersten bewegbaren Linse 56 und der zweiten bewegbaren Linse 54 entlang des Arbeitsstrahlengangs eingerichtet sind. Die erste bewegbare Linse 56 und die zweite bewegbare Linse 54 können durch Betätigung der Schiebemechanismen 72 und 74 und/oder von der Steuereinheit 70, die eigene diesem Zweck dienende Antriebe umfasst (nicht gezeigt), innerhalb jeweiliger Verstellbereiche entlang des Arbeitsstrahlengangs verschoben werden.

Der Abstand zwischen der objektseitigen Hauptebene der ersten bewegbaren Linse 56 und dem ersten Fenster 12, durch das der Arbeitsstrahl 14 in das optische System eintritt, weicht in der gezeigten Ausführungsform nicht mehr als 10 % von der Brennweite der ersten bewegbaren Linse 56 ab. Ferner sind die Brennweiten und die Lagen der ersten bewegbaren Linse 56 und der zweiten bewegbaren Linse 54 so gewählt, dass es zu keinem Zwischenfokus innerhalb der Fokussiervorrichtung 16 kommt.

In der dargestellten Ausführungsform weist die erste bewegbare Linse 56 eine positive Brennweite auf. Die zweite bewegbare Linse 54 weist eine negative Brennweite auf, und die feststehende Linse 52 weist eine positive Brennweite auf. Bei dem vorliegenden Abstand zwischen der ersten bewegbaren Linse 56 und dem ersten Fenster 12 führt dies dazu, dass der Arbeitsstrahl 14 zwischen der ersten bewegbaren Linse 56 und der zweiten bewegbaren Linse 54 in der dargestellten Ausführungsform divergent ist.

Der Abbildungsmaßstab der Fokussiervorrichtung 16 kann verkleinert werden, indem der Abstand zwischen der ersten bewegbaren Linse 56 und dem ersten Fenster 12 verkleinert wird, zum Beispiel durch Betätigung des Schiebemechanismus 72 oder durch eine entsprechende von der Steuereinheit 70 gesteuerte Schiebebewegung der ersten bewegbaren Linse 56. Damit wird eine Verkleinerung des Fokusdurchmessers des Arbeitsstrahls 14 bewirkt, sodass die Strahlintensität des auf dem Arbeitsfeld 18 einfallenden Arbeitsstrahls zunimmt.

Durch Vergrößern des Abstandes zwischen der ersten bewegbaren Linse 56 und dem ersten Fenster 12 kann eine entsprechende Vergrößerung des Fokusdurchmessers des Arbeitsstrahls 14 herbeigeführt werden. Damit wird die Strahlintensität auf dem Arbeitsfeld 18 verringert.

Die Lage der zweiten bewegbaren Linse 54 kann so angepasst werden, dass das von der ersten 54 und der zweiten bewegbaren Linse 56 erzeugte virtuelle Bild des ersten Fensters 12 einen Abstand zur objektseitigen Hauptebene der feststehenden Linse 52 aufweist, der gemäß der Abbildungsgleichung unter Berücksichtigung der Brennweite der feststehenden Linse 52 dem Abstand zwischen der bildseitigen Hauptebene der feststehenden Linse 52 und der gewünschten Fokuslage, d.h. der Arbeitsfläche 18, entspricht. Mit anderen Worten weist das von der ersten 54 und der zweiten bewegbaren Linse 56 erzeugte virtuelle Bild des ersten Fensters 12 einen Abstand zur objektseitigen Hauptebene der feststehenden Linse 52 auf, der einem Abstand entspricht, der den aus der Abbildungsgleichung resultierenden Abstand zwischen Fokus und bildseitiger Hauptebene der feststehenden Linse 52 an den zur gewünschten Fokuslage passenden Abstand angleicht.

In der in der Fig. 2 gezeigten Ausführungsform weist die erste bewegbaren Linse 56 eine Brennweite von 63 mm auf, während die zweite bewegbaren Linse 54 eine Brennweite von 68 mm aufweist. Die feststehende Linse 52 weist eine Brennweite von 126 mm auf. Die Lagen der ersten bewegbaren Linse 56 und der zweiten bewegbaren Linse 54 können von der Steuereinheit 70 innerhalb eines Verstellbereiches von 11 mm gesteuert und bestimmt werden, so dass der Abstand zwischen der ersten bewegbaren Linse 56 und der zweiten bewegbaren Linse 54 zwischen 564 mm und 586 mm variieren kann. Ferner kann der Abstand zwischen der ersten bewegbaren Linse 56 und dem ersten Fenster 12 in einem Bereich zwischen 60 mm und 71 mm eingestellt werden.

In einer beispielhaften Ausführungsform kann das Arbeitsfeld eine beliebige Größe von $200 \times 200 \ mm^2$ bis $600 \times 600 \ mm^2$, vorzugsweise bis $500 \times 500 \ mm^2$ aufweisen, wobei die Anpassung auf die jeweilige Größe des Arbeitsfelds mithilfe der Fokussiervorrichtung 16 vorgenommen werden kann.

In der Ausführungsform der Figuren 1 und 2 können die bewegbaren Linsen 54, 56 auch derart angesteuert werden, dass sie sich gegensinnig entlang des Arbeitsstrahlengangs bewegen, sodass sich lediglich der Fokusdurchmesser verändert und sich die Fokuslage bzw. der Abstand vom Fokus zur XY-Ablenkvorrichtung 22 nicht verändert. Mit anderen Worten kann der Fokusdurchmesser verändert werden ohne dabei gleichzeitig die Strahlkaustik zu verändern. Die bewegbaren Linsen 54, 56 können so positioniert werden, dass die Fokuslage bei Variationen des Arbeitsstrahlsdurchmessers beibehalten wird oder umgekehrt.

Die beiden vorgenannten Ansteuerungsarten können auch miteinander kombiniert werden, sodass sichergestellt werden kann, dass der Arbeitsstrahl in Abhängigkeit des jeweiligen Arbeitsabstands und des momentanen Auslenkwinkels bzw. Scanwinkels, der durch die momentane Einstellung der XY-Ablenkvorrichtung 22 vorgegeben ist, während des gesamten Scanprozesses auf der Arbeitsfläche 18 fokussiert ist, wobei gleichzeitig der Fokusdurchmesser während des gesamten Scanprozesses unabhängig von der Fokuslage variiert werden kann. Dies ermöglicht eine sehr flexible und vorteilhafte Prozessgestaltung, weil die Intensität des Arbeitsstrahls auf der Arbeitsfläche 18 schnell und kontrolliert an veränderte Prozessbedingungen oder Anforderungen, beispielsweise eine veränderte Korngröße des Pulvers im additiven Bauprozess oder eine veränderte Scangeschwindigkeit, angepasst werden kann.

In anderen weniger bevorzugten Ausführungsformen kann die Fokussiervorrichtung 16 auch lediglich eine bewegbare Linse zur Anpassung der Brennweite umfassen.

Der vorgenannte Aufbau der erfindungsgemäßen Ablenkeinheit 10 gestattet ein besonders vorteilhaftes kombiniertes Durchführen eines Laserarbeitsprozesses, beispielsweise eines additiven Fertigens durch Fusion, Versintern oder Verschmelzen von Pulverkörnern in einem Pulverbett, und einer gleichzeitigen Prozessbeobachtung und Prozessüberwachung des Laserarbeitsprozesses mittels der Kamera 30.

Die Funktionsweise und Vorteile der Ablenkeinheit 10 werden im Folgenden näher erläutert.

Das optische Element 20, das sowohl im Arbeitsstrahlengang als auch im Bildstrahlengang angeordnet ist, reflektiert die Wellenlänge des Arbeitsstrahls 14 und ist für die Wellenlänge der Bildstrahlen 32 zumindest teilweise transparent. Dadurch werden die Bildstrahlen 32, die zunächst gegenläufig zum Arbeitsstrahl 14 auf dem Arbeitsstrahlengang durch das zweite Fenster 24 in die Ablenkeinheit 10 eintreten, räumlich vom Arbeitsstrahl 14 getrennt und werden nach der Trennung über die Optikvorrichtung 39 zur Kamera 30 weitergeleitet. Mit anderen Worten sind der Bildstrahlengang und der Arbeitsstrahlengang in Strahlrichtung des Arbeitsstrahls 14 (downstream Richtung) hinter dem optischen Element 20 überlagert und in entgegengesetzter Strahlrichtung des Arbeitsstrahls 14 (upstream Richtung) hinter dem optischen Element 20 getrennt.

In manchen Ausführungsformen reflektiert das optische Element (20) nicht nur eine erste Wellenlänge zumindest teilweise, sondern einen ersten Wellenlängenbereich zumindest teilweise und/oder transmittiert nicht nur eine andere zweite Wellenlänge zumindest teilweise, sondern einen oder mehrere andere Wellenlängenbereiche zumindest teilweise. Diese ein oder mehreren anderen Wellenlängenbereiche können dabei unterhalb und/oder oberhalb des ersten Wellenlängenbereichs bzw. der erste Wellenlänge liegen.

In dem Beispiel der Figur 1 besteht das optische Element 20 aus einer planparallelen Platte, die geneigt im Bildstrahlengang angeordnet ist. Die der Winkel zwischen der Flächennormalen der planparallele Platte und dem Bildstrahlengang kann beispielsweise 45° betragen.

In einigen Ausführungsformen liegt die Arbeitswellenlänge, für welche das optische Element 20 reflektierend ist, im Bereich zwischen 1020 nm und 1080 nm, beispielsweise bei 1070 nm. Die Bildstrahlen 32 werden in einigen Ausführungsformen durch eine Beleuchtung (nicht gezeigt in Figur 1) bereitgestellt, die unterhalb der XY-Ablenkvorrichtung 22 um den Arbeitsstrahlengang herum um angeordnet sein kann und die die Arbeitsfläche 18 beleuchtet. In einigen Ausführungsformen wird mit einer Wellenlänge von 850 nm beleuchtet, für die das optische Element 20 transparent ist oder zumindest teilweise transmittierend ist.

In einer beispielhaften Ausführungsform, liegt die Reflektivität des optischen Elements 20 bei 45° für die Wellenlänge 1070 nm bei über 99 % und liegt die Transmission in dem Wellenlängenbereich von 400 nm bis 900 nm bei >20%, vorzugsweise >70%, besonders vorzugsweise >90% und liegt die Transmission für den Wellenlängenbereich von 1300 nm bis 2100 nm bei >20%, vorzugsweise >70%, besonders vorzugsweise >90% . Dadurch, dass auch andere Wellenlängen als die Beleuchtungswellenlänge von beispielsweise 850 nm transmittiert werden können, können weitere Eigenschaften beobachtet und dokumentiert werden, worauf weiter unten noch eingegangen wird.

Da der Arbeitsstrahlengang und der Bildstrahlengang in downstream-Richtung vom optischen Element 20 überlagert sind, wird die XY-Ablenkvorrichtung 22 gleichzeitig für das Scannen des Arbeitsstrahls 14 und für das Ablenken der Bildstrahlen 32, die vom Ort des jeweiligen Arbeitsbereichs 34 zur XY-Ablenkvorrichtung 22 reflektiert werden, zur Kamera 30 verwendet. Dadurch wird während des Arbeitsprozesses das Sichtfeld der Kamera 30 gemeinsam und synchron mit dem Arbeitsstrahl 14 über die Arbeitsfläche 18 gescannt, sodass der jeweilige Arbeitsbereich 34 in der Größe des Sichtfelds der Kamera 30 auf der Arbeitsfläche 18 auf den Kamerachip abgebildet wird, und das Prozessgeschehen online überwacht und gesteuert werden kann.

Es wird darauf hingewiesen, dass die Größen "Kamerasichtfeld", "Arbeitsfeld" und "Arbeitsabstand" (bei dem eine Fokussierung des Arbeitsstrahls 14 möglich ist) durch die Ablenkeinheit definiert sind und nicht vom Vorhandensein einer Arbeitsfläche 18 abhängig sind. Das Kamerasichtfeld und das Arbeitsfeld entsprechen Winkelbereichen in Bezug auf eintretende Strahlen bzw. austretende Strahlen, wobei diese Winkelbereiche bei einem bestimmten Arbeitsabstand jeweils einer Fläche entsprechen.

Während des Scannens kann, wie zuvor beschrieben wurde, mithilfe der Fokussiervorrichtung 16 der Arbeitsprozess flexibel gestaltet und variiert werden, insbesondere können unabhängig voneinander ein Planfeldausgleich und eine Variation der Fokusgröße auf der Arbeitsfläche 18 vorgenommen werden. Es wird darauf hingewiesen, dass die Fokussiervorrichtung 16 auch auf nicht ebenen Arbeitsflächen 18 sicherstellen kann, dass der Fokus während des Scannens auf der Arbeitsfläche 18 liegt und dabei unabhängig von der Fokuslage vergrößert und verkleinert werden kann.

In ähnlicher Weise kann während des Scannens über eine entsprechende Ansteuerung der bewegbaren Linse 44 eine Veränderung der Brennweite der Abbildungsoptik 40 vorgenommen werden. Dadurch kann für unterschiedliche Auslenkwinkel der XY-Ablenkvorrichtung 22 während des Scannens und für unterschiedliche Arbeitsabstände zwischen der Ablenkeinheit 10 und der Arbeitsfläche 18, die Brennweite jeweils so eingestellt und angepasst werden, dass der jeweils unterschiedlich weit von der XY-Ablenkvorrichtung 22 entfernte Arbeitsbereich 34 scharf auf den Kamerachip abgebildet wird. Mit anderen Worten gestattet die Optikvorrichtung 39 der Abbildungsoptik 40, dass die Bildebene immer mit der Chipebene übereinstimmt und dadurch das jeweilige Arbeitsfeld scharf und mit hoher räumlicher Auflösung auf die Chipebene der Kamera abgebildet werden kann.

In der vorliegenden Beschreibung beziehen sich die Optikvorrichtung 39 und die Fokussiervorrichtung 16 auf solche Elemente, die in einem der getrennten Strahlengänge, d.h. in Upstream-Richtung des optischen Elements 20 angeordnet sind, unabhängig davon, ob in Downstream-Richtung des optischen Elements 20 weitere Linsen im Arbeits- und Bildstrahlengang gemeinsam angeordnet sind, welche die Fokussierung des Arbeitsstrahls 14 und Kollimation der Bildstrahlen 32 zwar beeinflussen aber nicht zeitlich verändern oder anpassen.

Dadurch, dass die Optikvorrichtung 39 und die Fokussiervorrichtung 16, räumlich getrennt voneinander und jeweils nur im Bildstrahlengang bzw. nur im Arbeitsstrahlengang angeordnet sind, wirkt sich die Anpassung des Arbeitsstrahls 14 durch die Fokussiervorrichtung 16 nicht auf die abzubilden Bildstrahlen 32 aus und wirkt sich die Anpassung der Abbildung durch die Optikvorrichtung 39 nicht auf den Arbeitsstrahl 14 aus. Durch diese Entkopplung können der Arbeitsprozess und dessen Beobachtung gleichzeitig und unabhängig voneinander variiert werden, ohne dass für Ansteuerung der Fokussiervorrichtung 16 die Ansteuerung der Optikvorrichtung 39 berücksichtigt werden muss und umgekehrt. Dadurch können sowohl der Arbeitsprozess als auch die Beobachtung effizienter, flexibler, robuster und weniger störanfällig gleichzeitig miteinander kombiniert durchgeführt werden.

Aufgrund der Transmission der Bildstrahlen 32 durch das geneigt im Bildstrahlengang stehende optische Element 20, kann es zu einer optischen Verzerrung kommen, beispielsweise in Form eines Astigmatismus. Dadurch kann die räumliche Auflösung der Abbildung des Arbeitsbereichs 34 auf den Kamerachip beeinträchtigt werden. Das Kompensationselement 36 dient dazu diese optische Verzerrung zu kompensieren.

In der Ablenkeinheit 10 der Figur 1, bei der das optische Element 20 aus einer planparallelen Platte besteht, besteht das Kompensationselement 36 ebenfalls aus einer planparallele Platte mit einer entsprechenden optischen Dicke für die Bildstrahlen 32, die mit derselben Neigung im Bildstrahlengang angeordnet ist jedoch gegenüber dem optischen Element 20 mit einem Winkel von 90° um die optische Achse des Bildstrahlengangs gedreht ist. Mit anderen Worten steht die Ebene, die durch die Flächennormale des optischen Elements 20 und die optische Achse der Bildstrahlen am Ort des optischen Elements 20 gebildet wird, senkrecht zur Ebene, die durch die Flächennormale des Kompensationselements 36 und dieselbe optische Achse der Bildstrahlen am Ort des Kompensationselements 36 gebildet wird. Dadurch kann die Verzerrung kompensiert oder zumindest verringert werden und der Arbeitsbereich 34 zumindest annähernd verzerrungsfrei abgebildet werden, sodass die räumliche Auflösung der Prozessbeobachtung verbessert werden kann.

Die Neigung des Kompensationselements 36 und/oder des optischen Element 20 zur optischen Achse der Bildstrahlen kann beispielsweise 45° betragen.

Bei der Ablenkeinheit 10 hat das Sichtfeld der Kamera in einem Arbeitsabstand von 300 mm eine Größe von 6 mm × 8 mm. Der Chip hat eine Größe von 2/3" bzw. 8,8 mm × 6,6 mm und hat 1280 × 1024 Pixel. Die Pixelauflösung beträgt damit etwa 6 $\mu$m. Die Erfinder haben herausgefunden, dass sich damit ein optimaler Kompromiss zwischen räumlicher Bildauflösung und zeitlicher Auflösung der Prozessbeobachtung für bevorzugte Anwendungen im Bereich der additiven Fertigung erreichen lasst. Zwar kann bei größerer Anzahl der Pixel bei gleichzeitig größerer Abbildungsweglänge und größerem Chip oder bei gleichzeitig komplexerer Abbildungsoptik die räumliche Auflösung noch erhöht werden. Allerdings verschlechtert sich bei einer Zunahme der Pixelanzahl die zeitliche Auflösung.

Der Arbeitsabstand entspricht dem Abstand zwischen dem zweiten Fenster 24 und der Arbeitsfläche 18 während des Arbeitsprozesses. Der Arbeitsbereich 34 der Größe von 6 mm × 8 mm wird mithilfe der Abbildungsoptik 40 auf den 8,8 mm × 6,6 mm großen Kamerachip abgebildet, wobei das Abbildungsverhältnis (= (6 mm × 8 mm)/(8,8 mm × 6,6 mm) etwa 0,8 beträgt). Die Abbildungsweglänge, welche die Bildstrahlen 32 vom Eintritt in die Abbildungsoptik 40, d.h. von der Linse 42, bis zum Auftreffen auf den Kamerachip zurücklegen, beträgt dabei 480 mm. Diese Abbildungsweglänge von lediglich 480 mm gestattet es, den Arbeitsbereich 34 der Größe von 6 mm × 8 mm mit einer wenig komplexen und robusten Optik in einer optischen Auflösung von etwa 15 $\mu$m auf den Kamerachip abzubilden. Eine größere Abbildungsweglänge ermöglicht zwar eine höhere räumliche optische Auflösung, gestattet dabei aber nicht eine so kompakte Bauweise der Ablenkeinheit 10. Die vorgenannte Abbildungsweglänge ermöglicht ein ausreichend und optimiert scharfes Bild und insbesondere eine genügend hohe Lichtintensität bzw. Beleuchtungsdichte auf dem Chip.

Die Abbildungsweglänge von 480 mm bietet einen besonders vorteilhaften Kompromiss zwischen einer kompakten Bauweise, einem ausreichend großen Kamerasichtfeld im Arbeitsabstand, einer ausreichend hohen Bildaufnahmerate während des Arbeitsprozesses und einer Abbildung mit einer möglichst hohen räumlichen Auflösung. Diese Abbildungsweglänge ermöglicht ein ausreichend und optimiert scharfes Bild und insbesondere eine genügend hohe Lichtintensität für die Beleuchtung des Chips.

Eine Fläche von 6 mm × 8 mm ist ausreichend groß, um bei einem Leserarbeitsprozess, insbesondere einem laserbasierten additiven Bauprozess, den Prozess selbst mit einer ausreichend großen Prozessumgebung zu beobachten.

Für eine gute Strukturdarstellung sollten die abgebildeten Strukturen mindestens zweimal so groß wie die räumliche Auflösung sein. Die optische Auflösung von 15 μm gestattet daher Strukturen bis zu einer Größe von etwa 30 μm räumlich aufgelöst darzustellen. Dies ist besonders vorteilhaft bei additiven Fertigungsprozessen mit Pulvern, bei denen die Korngröße bis hinunter zu 45 μm betragen kann aber üblicherweise nicht darunter liegt. Die Abbildungsweglänge von 480 mm bietet damit die notwendige räumliche Auflösung für eine zuverlässige und genaue räumliche Beurteilung solcher Arbeitsprozesse.

Gleichzeitig gestattet die Abbildungsweglänge von lediglich 480 mm eine hohe Kompaktheit der Ablenkeinheit 10, die insbesondere für ein parallelisiertes Arbeiten erforderlich ist. Bei einem parallelisierten Arbeiten sind mehrere Ablenkeinheiten gleichzeitig an einem gemeinsam Bauprozess beteiligt und müssen dafür vergleichsweise dicht nebeneinander angeordnet sein.

Die hohe Geschwindigkeit der Bildaufnahme, die durch die Abbildungsweglänge von 480 mm Kombination mit dem Kamerachip von 2/3" ermöglicht wird, ist ebenfalls besonders vorteilhaft für einen laserbasierten additiven Fertigungsprozess. Die Scangeschwindigkeit, mit welcher der Arbeitsstrahl über die Pulverkörner oder ein anderes Material gescannt wird, kann vergleichsweise hoch sein, z.B. 4 m/s, sodass eine hohe Bildaufnahme erforderlich ist, um den Prozess lückenlos überwachen zu können.

Die Kamera 30 besteht beispielsweise aus einer Hochgeschwindigkeits-CMOS-Kamera mit einer Bildaufnahmerate von 1 kHz bis 2 kHz. Um die hohe Bildaufnahmerate lückenlos und konstant über einen langen Zeitraum hinweg sicherzustellen, kann die Kamera 30 an einen Framegrabber angeschlossen sein.

Die Beleuchtung ist vorzugsweise geblitzt und dabei mit der Bildaufnahme der Kamera 30 synchronisiert. Die Dauer eines Beleuchtungsblitzes ist bei der Ablenkeinheit 10 vorzugsweise größer als die Bildeinzugsdauer der Kamera 30. Dadurch kann jeder Beleuchtungsblitz das gesamte Arbeitsfeld, das für die Bearbeitung durch die Ablenkeinheit 10 zur Verfügung steht, homogen ausleuchten und gleichzeitig jedes Bild, das nur einen kleinen Bereich des ausgeleuchteten Bereichs entsprechen kann, mit einer genügend hohen Helligkeit aufgenommen werden.

Zudem ist die Aus-Zeit der Beleuchtung vorzugsweise größer als die An-Zeit der Beleuchtung. Dadurch kann eine zu starke Erwärmung vermieden werden. Dies ermöglicht eine Verlängerung der Lebensdauer und eine höhere Prozesszuverlässigkeit.

Eine statische, d.h. nicht gescannte, gleichzeitige Beleuchtung der Gesamtfläche des Arbeitsfeldes, die vorzugsweise verwendet wird, ermöglicht einen robusten Betrieb und einheitliche Beleuchtungsbedingungen für das gesamte Arbeitsfeld.

Vorzugsweise umfasst die Ablenkeinheit 10 auch eine oder mehrere Steuereinheiten (nicht gezeigt), die dazu eingerichtet sind, die Fokussiervorrichtung 16 und die Optikvorrichtung 39 in Abhängigkeit der Einstellung der XY-Ablenkvorrichtung 22 und/oder des Arbeitsabstandes anzusteuern und damit den Arbeitsprozess und den Beobachtungsprozess - wie oben beschrieben - anzupassen bzw. zu steuern.

Neben der Prozessüberwachung mittels der Kamera 30 umfasst die Ablenkeinheit 10 der Figur 1 eine zusätzliche Überwachungsmöglichkeit mithilfe einer Fotodiode 58. Die Fotodiode 58 ist hinter dem zweiten optischen Element 38 angeordnet, das den Bildstrahlengang in einen ersten Strahlengang zur Kamera 30 und einen zweiten Strahlengang zur Fotodiode 58 räumlich aufteilt. Dabei wird die Beleuchtungswellenlänge, die beispielsweise 850 nm betragen kann, wie oben beschrieben, vom zweiten optischen Element 38 reflektiert und andere Wellenlängen, die vom ersten optischen Element 20 transmittiert werden, ebenfalls vom zweiten optischen Element 38 transmittiert, sodass diese mithilfe der Fotodiode 58 integrativ detektiert werden können.

In einer beispielhaften Ausführungsform weist das zweite optische Element 38 im Wellenlängenbereich von 820 nm bis 870 nm und bei einem Einfallswinkel von 45° eine Reflexion von über 99 % auf, weist im Wellenlängenbereich von 400 nm bis 700 nm eine Transmission von über 94 % auf und weist im Wellenlängenbereich von 1200 nm bis 2100 nm eine Transmission von über 93 % auf. Damit kann mithilfe der Fotodiode 58 überwacht werden, wie viel die Strahlungsintensität am Ort des Arbeitsprozesses in diesen Wellenlängenbereichen (400 - 700 nm und 1200 - 2100 nm) oder Teilen davon entsteht, wodurch zusätzliche Eigenschaften und Parameter des Arbeitsprozesses überwacht werden können.

In anderen Ausführungsformen kann anstatt der Fotodiode 58 auch eine andere Detektionseinrichtung vorgesehen sein, beispielsweise ein Pyrometer, eine VIR Kamera, die für den sichtbaren und für den infraroten Wellenlängenbereich empfindlich ist, und/oder eine Multispektralkamerazur Erstellung einer Strahlungskarte oder Wärmekarte, ein thermischer Bildsensor oder ein optischer Kohärenztomograph.

Bei solchen Ausführungsformen, bei denen die andere Detektionseinrichtung einen optischen Kohärenztomographen umfasst, kann eine Kohärenzdetektion vorgenommen werden, indem vom Kohärenztomographen ein erster Beleuchtungssteilstrahl durch das zweite optische Element 38 gesandt wird, der nach Durchtreten des ersten optischen Elements 20 mit dem Arbeitsstrahl überlagert wird und der nach einer Reflexion von der Arbeitsfläche 18 zurück zum optischen Kohärenztomographen geleitet wird. Dort wird der reflektierte erste Beleuchtungssteilstrahl mit einem zweiten Beleuchtungsteilstrahl überlagert und mithilfe einer Fotodiode ein Interferenzmuster detektiert. Mithilfe einer Analyse des Interferenzmusters ist es möglich, eine Oberflächentopographie zu bestimmen. Dabei kann die Oberflächentopographie sowohl unmittelbar vor dem Arbeitsprozess als auch unmittelbar danach bestimmt werden, wodurch eine zusätzliche Überwachungsmöglichkeit des Arbeitsprozesses zur Verfügung gestellt wird.

Andere Ausführungsformen umfassen lediglich eine Kamera 30 für die Prozessüberwachung und weisen keine Fotodiode 58 und keine andere Detektoreinrichtung für eine zusätzliche Prozessüberwachung auf. In diesen Ausführungsformen kann das zweite optische Element 38 aus einem Spiegel bestehen, der lediglich reflektiert aber nicht transmittiert.

Noch andere nicht dargestellte Ausführungsformen der erfindungsgemäßen Ablenkeinheit umfassen lediglich einen optischen Kohärenztomographen für die Prozessüberwachung und/oder Prozessbeobachtung, und zwar als erste Detektionseinrichtung anstelle der in Fig. 1 dargestellten Kamera 30. Diese Ausführungsformen müssen demnach keine Fotodiode 58 und keine andere Detektoreinrichtung für eine zusätzliche Prozessüberwachung aufweisen. In diesen Ausführungsformen kann das zweite optische Element 38 aus einem Spiegel bestehen, der lediglich reflektiert aber nicht transmittiert. Dabei kann die Kohärenzdetektion wie zuvor beschrieben vorgenommen werden, jedoch mit dem Unterschied, dass der vom Kohärenztomographen gesandte erste Beleuchtungssteilstrahl nicht durch das zweite optische Element 38 transmittiert wird, sondern an diesem reflektiert wird, um anschließend in Richtung auf die Arbeitsfläche 18 gelenkt zu werden.

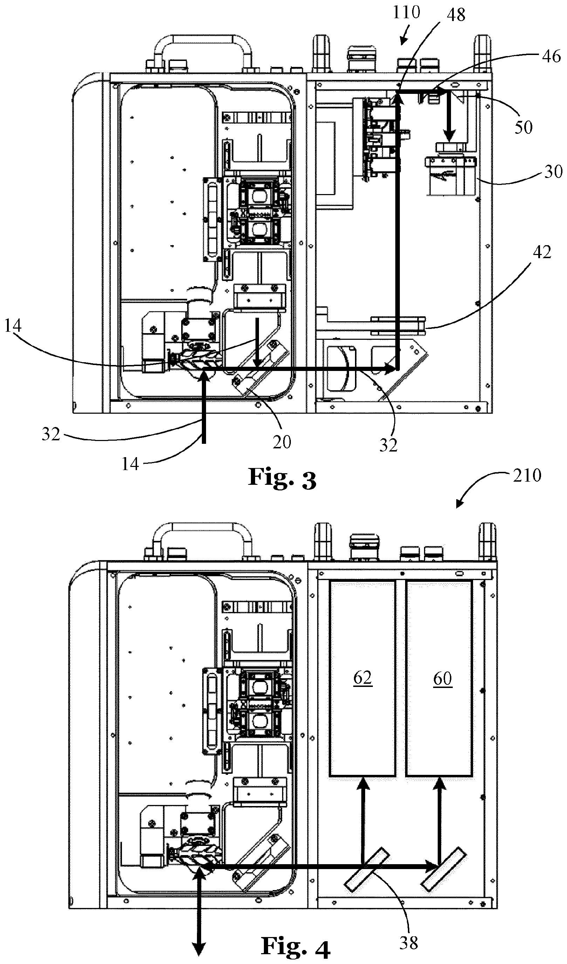

Figur 3 zeigt eine Schnittansicht einer solchen Ablenkeinheit 110, die lediglich eine Kamera 30 zur Prozessüberwachung aufweist. Wie in der Figur 3 dargestellt ist, wird über eine Umlenkung des Bildstrahlengangs innerhalb der Abbildungsoptik 40 mithilfe der Umlenkspiegel 48, 50 eine kompaktere Bauform der Ablenkeinheit 110 bei kleinstmöglicher Abbildungsweglänge, welche die zuvor beschriebenen Vorteile bietet, ermöglicht.

Figur 4 zeigt eine Schnittansicht einer Ablenkeinheit 210 gemäß einer weiteren Ausführungsform, die im Unterschied zur Ablenkeinheit 10 anstatt der Fotodiode 58 einen thermischen Bildsensor umfasst, mit dem eine Wärmekarte der Prozessumgebung erstellt werden kann. Das in Figur 4 dargestellte Kameramodul 62 umfasst die zuvor beschriebene Optikvorrichtung 39 und die Kamera 30. Anstelle des Kameramoduls 62 kann auch ein OCT-Modul vorgesehen sein, das einen OCT und die zuvor beschriebene Optikvorrichtung 39 umfasst.

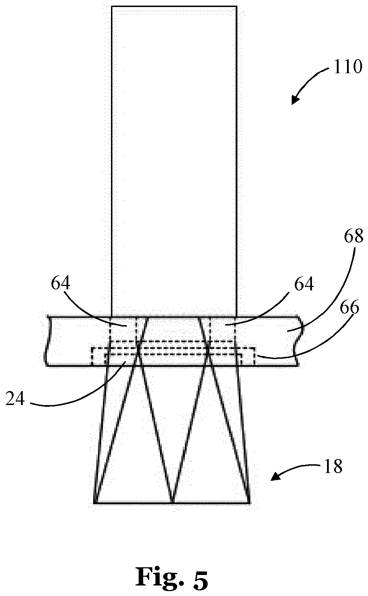

Figur 5 zeigt eine Außenansicht der Ablenkeinheit 110 einschließlich einer Beleuchtung 64, die ringförmig, beispielsweise kreisringförmig, in einer quadratischen Ringform oder in einer anderen Ringform, um den Arbeitsstrahlengang angeordnet ist und die dafür eingerichtet ist, die Arbeitsfläche 18 durch das zweite Fenster 24 homogen und geblitzt zu beleuchten. Das zweite Fenster 24 umfasst ein Schutzglas, das durch eine Halterung 66 innerhalb eines Stützrahmens 68 gehalten wird. Der Stützrahmen 68 kann eine Wasserkühlung umfassen, um den Innenraum der Ablenkeinheit 10 vor einer zu starken Erhitzung zu bewahren.

Wie in Figur 5 gezeigt ist, ist die Beleuchtung 64 vorzugsweise extern, d.h. außerhalb eines Innenraums der Ablenkeinheit 110 angeordnet, so dass die beleuchtenden Strahlen die Arbeitsfläche 18 nicht durch die Ablenkeinheit 110 hindurch - bzw. nicht durch ihren Innenraum hindurch - beleuchten. Zudem ist die Beleuchtung 64 statisch in Bezug auf ein Gehäuse der Ablenkeinheit 110 angebracht und werden die beleuchtenden Strahlen nicht gescannt. Dadurch kann Streustrahlung und Erwärmung innerhalb der Ablenkeinheit 110 vermieden oder reduziert werden und kann der Prozess robuster und zuverlässiger gemacht werden.

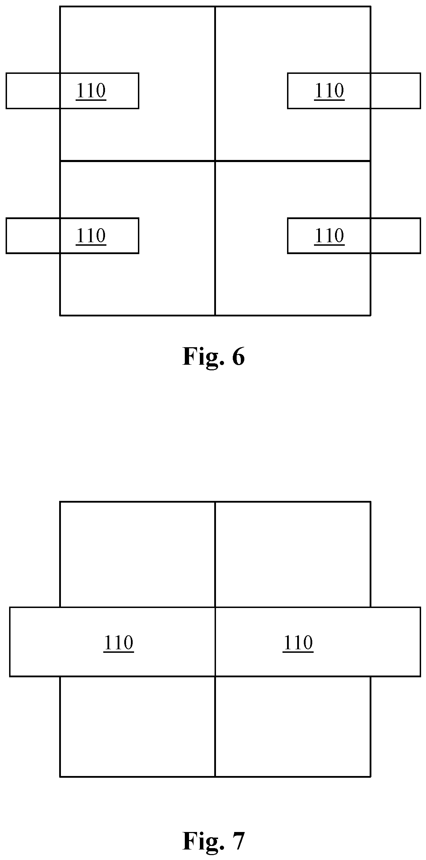

Figur 6 zeigt eine Draufsicht auf vier Ablenkeinheiten 110, die für ein parallelisiertes Arbeiten nebeneinander angeordneten angeordnet sind. In der dargestellten Anordnung grenzen die Arbeitsfelder benachbarter Ablenkeinheiten 110 nahtlos aneinander an und können sich dabei im Übergangsbereich auch teilweise überlappen. Dadurch können die Arbeitsfelder der Ablenkeinheiten zu einem Gesamtarbeitsfeld kombiniert werden, dass bis zu der 4-fachen Größe eines Einzelarbeitsfeldes betragen kann. Auf dem kombinierten Gesamtarbeitsfeld kann bei einem parallelisierten Arbeiten jede der Ablenkeinheiten 110 ihren eigenen Teilbereich bearbeiten, um einen entsprechenden Teil vergleichsweise großen Bauteils zu fertigen. Diese Anordnung und die entsprechende Möglichkeit eines parallelisierten Arbeitens werden dadurch ermöglicht, dass das jede der Ablenkeinheiten 110 ein Arbeitsfeld aufweist, das über die Projektionsfläche der Ablenkeinheit 110 in Draufsichtrichtung auf die Ebene des Arbeitsfeldes hinausreicht. Das parallelisierte Arbeiten auf einem größeren Arbeitsfeld mithilfe von mehreren Ablenkeinheiten gestattet die Herstellung größerer Bauteile in weniger Zeit.

Eine andere Möglichkeit des parallelisierten Arbeitens ist in Figur 7 dargestellt. Figur 7 zeigt eine Draufsicht auf zwei Ablenkeinheiten 110, die so nebeneinander angeordnet sind, dass sich ihre Arbeitsfelder auf einem gemeinsamen Arbeitsfeld überlagern, das gemeinsam und gleichzeitig von beiden Ablenkeinheiten 110 bearbeitet werden kann. Die Bauform der Ablenkeinheit kann dabei derart kompakt sein, insbesondere kann die Projektionsfläche der Ablenkeinheit 110 in Draufsichtrichtung, auch als "Footprint" bezeichnet, im Vergleich zum Arbeitsfeld derart klein sein und kann das Arbeitsfeld derart weit über den Footprint hinausreichen, dass das gemeinsame überlagerte Arbeitsfeld mindestens 50% der Größe des Arbeitsfelds von einer Ablenkeinheit 110 entspricht. In einigen Ausführungsformen kann das gemeinsame überlagerte Arbeitsfeld sogar 70% oder mehr der Fläche eines einzelnen Arbeitsfeldes umfassen. Damit können die Ablenkeinheiten besonders effizient für ein beschleunigtes Fertigen von Bauteilen verwendet werden, die zwar auch mit einer einzigen Ablenkeinheit herstellbar sind, jedoch nicht über einen so kurzen Zeitraum oder in so guter Qualität.

In anderen Ausführungsformen kann die Projektionsfläche der Ablenkeinheit auf die Ebene des Arbeitsfelds auch vollständig innerhalb des Arbeitsfeldes liegen. Anders als es in den Figuren 6 und 7 dargestellt ist, können diese Ablenkeinheiten so angeordnet werden, dass sich ihre Arbeitsfelder auf allen vier Seiten mit einem Arbeitsfeld einer anderen dieser Ablenkeinheiten überschneiden.

LISTE DER BEZUGSZEICHEN

| 10, 110, 210 | Ablenkeinheit |
|---|---|
| 12 | erstes Fenster |
| 14 | Arbeitsstrahl |
| 16 | Fokussiervorrichtung |
| 18 | Arbeitsfläche |
| 20 | optisches Element |
| 22 | XY-Ablenkvorrichtung |
| 24 | zweites Fenster |
| 26 | ersten Scanspiegel |
| 28 | zweiten Scanspiegel |
| 30 | Kamera |
| 32 | Bildstrahlen |
| 34 | Arbeitsbereich |
| 36 | Kompensationselement |
| 38 | zweites optisches Element |
| 40 | Abbildungsoptik |
| 39 | Optikvorrichtung |
| 42, 44, 46 | Linse |
| 48, 50 | Umlenkspiegel |
| 52, 54, 56 | Linse |
| 58 | Fotodiode |
| 60 | thermischer Bildsensor |
| 62 | Kameramodul |
| 64 | Beleuchtung |
| 66 | Halterung |
| 68 | Stützrahmen |
| 70 | Steuereinheit |
| 72 | Manueller Schiebemechanismus |
| 74 | Manueller Schiebemechanismus |

**Patentansprüche**

1. Ablenkeinheit (10, 110, 210) umfassend

- ein erstes Fenster (12), durch das ein optischer Arbeitsstrahl (14) in die Ablenkeinheit eintreten kann,
- ein zweites Fenster (24), durch das der Arbeitsstrahl aus der Ablenkeinheit austreten kann und durch das Detektionsstrahlen (32) von einem Arbeitsbereich (34) entlang des jeweiligen Verlaufs des austretenden Arbeitsstrahls (14) und gegenläufig zu diesem in die Ablenkeinheit eintreten können,
- ein optisches Element (20), das eine erste Wellenlänge zumindest teilweise reflektiert,
wobei die Ablenkeinheit

- einen Arbeitsstrahlengang definiert, den der Arbeitsstrahl (14) vom ersten Fenster (12) zum zweiten Fenster (24) über eine Reflektion am optischen Element (20) durchläuft, und

**dadurch gekennzeichnet, dass** die Ablenkeinheit weiterhin folgendes umfasst

- eine XY-Ablenkvorrichtung (22), die zwischen dem zweiten Fenster (24) und dem optischen Element (20) im Arbeitsstrahlengang angeordnet ist, um den Arbeitsstrahl (14) abzulenken, und um den ausgetretenen Arbeitsstrahl zu scannen, und
- eine Fokussiervorrichtung (16) zur Fokussierung des Arbeitsstrahls (14), wobei die Fokussiervorrichtung mindestens zwei bewegbare Linsen (54, 56) umfasst und eine veränderbare Brennweite aufweist und im Arbeitsstrahlengang zwischen dem ersten Fenster (12) und dem optischen Element (20) angeordnet ist, wobei die Fokussiervorrichtung (16) dazu eingerichtet ist, mindestens zwei Linsen der mindestens zwei bewegbaren Linsen (54, 56) gleichzeitig unabhängig voneinander zu bewegen und den Fokusdurchmesser des Arbeitsstrahls (14) zu verändern, ohne dabei gleichzeitig die Fokuslage zu verändern,

wobei die Ablenkeinheit (10, 110, 210) ferner eine Steuereinheit (70) umfasst, die dazu eingerichtet ist, Verschiebungen der mindestens zwei bewegbaren Linsen (54, 56) der Fokussiervorrichtung (16) entlang des Arbeitsstrahlengangs anzusteuern und die Brennweite der Fokussiervorrichtung (16) als Ganzes in Abhängigkeit einer Einstellung der XY-Ablenkvorrichtung (22) anzupassen.

2. Ablenkeinheit (10, 110, 210) nach Anspruch 1, bei der die Steuereinheit (70) ferner dazu eingerichtet ist, die Brennweite der Fokussiervorrichtung (16) in Abhängigkeit eines Arbeitsabstandes zu verändern.

3. Ablenkeinheit (10, 110, 210) nach Anspruch 1 oder 2, bei der die Fokussiervorrichtung (16) dafür eingerichtet ist, mehrere der mindestens zwei bewegbaren Linsen (54, 56) gemeinsam entlang des Arbeitsstrahlengangs zu bewegen.

**4.** Ablenkeinheit (10, 110, 210) nach einem der vorhergehenden Ansprüche, bei der die Fokussiervorrichtung dafür eingerichtet ist, die mindestens zwei bewegbaren Linsen (54, 56) gegenläufig zu bewegen.

**5.** Ablenkeinheit (10, 110, 210) nach einem der Ansprüche 3 oder 4, bei der der Abstand zwischen einer ersten bewegbaren Linse (56) der bewegbaren Linsen der Fokussiervorrichtung und einer zweiten bewegbaren Linse (54) der bewegbaren Linsen der Fokussiervorrichtung so gewählt ist, dass die axiale Lage eines von der ersten bewegbaren Linse (56) und der zweiten bewegbaren Linse (54) erzeugten virtuellen Bildes innerhalb eines Bereichs variieren kann, der dem Verstellbereich der zweiten bewegbaren Linse (54) entspricht, wobei die zweite bewegbare Linse (54) entlang des Arbeitsstrahlengangs innerhalb des Verstellbereiches bewegbar ist.

**6.** Ablenkeinheit (10, 110, 210) nach einem der vorhergehenden Ansprüche, wobei die Steuereinheit ferner dazu eingerichtet ist, die Verschiebungen der mindestens zwei bewegbaren Linsen (56, 54) entlang des Arbeitsstrahlengangs derart anzusteuern, dass sich die mindestens zwei bewegbaren Linsen (56, 54) gegenläufig entlang des Arbeitsstrahlengangs bewegen.

**7.** Ablenkeinheit (10, 110, 210) nach einem der vorhergehenden Ansprüche, wobei die Steuereinheit mit einer Detektionseinrichtung (30) verbunden ist und dazu eingerichtet ist, die Fokussierung der Ablenkeinheit vollautomatisiert zu steuern.

**8.** Ablenkeinheit (10, 110, 210) nach einem der vorhergehenden Ansprüche, die ferner einen oder mehrere Schiebemechanismen (72, 74) umfasst, die zur manuellen Verschiebung der mindestens zwei bewegbaren Linsen (56, 54) entlang des Arbeitsstrahlengangs eingerichtet sind.

**9.** Ablenkeinheit (10, 110, 210) nach einem der vorhergehenden Ansprüche, die so bemessen und ausgelegt ist, dass vier dieser Ablenkeinheiten so angeordnet werden können, dass sich für ein oder mehrere Arbeitsabstände ihre Arbeitsfelder zu einem nicht unterbrochenen ebenen Gesamtarbeitsfeld der 3,5-fachen bis 4-fachen Größe der Einzelarbeitsfelder zusammenfügen; und/oder die so bemessen und ausgelegt ist, dass zwei dieser Ablenkeinheiten so angeordnet werden können, dass sich ihre Arbeitsfelder auf einem gemeinsamen Arbeitsfeld überlagern, wobei das gemeinsame Arbeitsfeld eine Fläche aufweist, die mindestens 50%, vorzugsweise mindestens 60%, besonders vorzugsweise mindestens 70% der Fläche eines jeweiligen Einzelarbeitsfeldes beträgt.

**10.** Ablenkeinheit (10, 110, 210) nach einem der vorhergehenden Ansprüche, wobei

    - das optische Element (20) ferner zumindest eine andere zweite Wellenlänge zumindest teilweise transmittiert;
wobei die Ablenkeinheit (10, 110, 210) ferner eine erste Detektionseinrichtung (30) umfasst, wobei die Ablenkeinheit ferner

        - einen Detektionsstrahlengang definiert, den die Detektionsstrahlen (32) vom zweiten Fenster (24) zur ersten Detektionseinrichtung (30) durchlaufen, wobei die Detektionsstrahlen (32) zumindest teilweise durch das optische Element (20) transmittiert werden, und
        - eine Optikvorrichtung (39) umfasst, die im Detektionsstrahlengang zwischen dem optischen Element (20) und der ersten Detektionseinrichtung (30) angeordnet ist und die eingerichtet ist, eine Brennweite für die Detektionsstrahlen (32) zu verändern;

wobei die XY-Ablenkvorrichtung (22) zwischen dem zweiten Fenster (24) und dem optischen Element (20) im Arbeitsstrahlengang und im Detektionsstrahlengang angeordnet ist, um den Arbeitsstrahl (14) abzulenken, und um den ausgetretenen Arbeitsstrahl zu scannen und um gleichzeitig die Detektionsstrahlen (32) abzulenken, damit sie den Detektionsstrahlengang durch das optische Element (20) hindurch bis hin zur ersten Detektionseinrichtung (30) durchlaufen.

**11.** Ablenkeinheit (10, 110, 210) nach Anspruch 10, bei der die Optikvorrichtung (39) für eine Anpassung der Kollimation, der Fokussierung oder einer Strahlaufweitung in Abhängigkeit einer Einstellung der XY-Ablenkvorrichtung (22) und/oder eines Arbeitsabstandes eingerichtet ist.

**12.** Ablenkeinheit (10, 110, 210) nach Anspruch 10 oder 11, wobei die erste Detektionseinrichtung eine Kamera (30) ist oder umfasst und die eine Abbildungsoptik (40) zum Abbilden des Arbeitsbereichs (34) auf die Kamera (30) umfasst, wobei die Abbildungsoptik (40) die Optikvorrichtung (39) umfasst und die Optikvorrichtung (39) eingerichtet ist, die Brennweite der Abbildungsoptik (40) zu verändern.

**13.** Ablenkeinheit (10, 210) nach einem der vorhergehenden Ansprüche, die weiterhin ein zweites optisches Element (38) und eine zweite Detektionseinrichtung (58) umfasst, wobei das zweite optische Element (38)

- im Bildstrahlengang zwischen dem optischen Element (20) und der ersten Detektionseinrichtung (30) angeordnet ist,
- die zweite Wellenlänge zur Weiterleitung an die erste Detektionseinrichtung (30) zumindest teilweise reflektiert,
- andere Wellenlängen zur Weiterleitung an die zweite Detektionseinrichtung (58) zumindest teilweise transmittiert.

14. Ablenkeinheit (10, 110, 210) nach einem der vorhergehenden Ansprüche zur "Direct Powder Fusion", Vat Photopolimerisation und/oder "Direct Energy Deposition".

15. Verwendung einer Ablenkeinheit (10, 110, 210) nach einem der vorhergehenden Ansprüche zur additiven Fertigung, insbesondere zur "Direct Powder Fusion", Vat Photopolimerisation und/oder "Direct Energy Deposition".

**Claims**

1. Deflection unit (10, 110, 210) comprising:

- a first window (12), through which an optical work beam (14) can enter the deflection unit,
- a second window (24), through which the work beam can exit from the deflection unit and through which detection beams (32) can enter the deflection unit from a work region (34) along the corresponding trajectory of the outgoing work beam (14) and in a direction opposite thereto,
- an optical element (20) reflecting a first wavelength at least partially,

wherein the deflection unit

- defines a work beam path followed by the work beam (14) from the first window (12) to the second window (24) via a reflection at the optical element (20), and

**characterised in that** the deflection unit further comprises:

- an XY deflection device (22) arranged in the work beam path between the second window (24) and the optical element (20) for deflecting the work beam (14) and for scanning the outgoing work beam, and
- a focusing device (16) for focussing the work beam (14), wherein the focusing device comprises at least two movable lenses (54, 56) and has a variable focal length and is arranged in the work beam path between the first window (12) and the optical element (20), wherein the focusing device (16) is configured for moving at least two lenses of the at least two movable lenses (54, 56) simultaneously and independently of each other and for modifying a focus diameter of the work beam (14) without modifying at the same time a focus position;

wherein the deflection unit (10, 110, 210) further comprises a control unit (70) configured for controlling shiftings of the at least two movable lenses (54, 56) of the focusing device (16) along the working beam path and for adjusting the focal length of the focusing device (16) as a whole depending on an adjustment of the XY deflection device (22).

2. Deflection unit (10, 110, 210) according to claim 1, wherein the control unit (70) is further configured for modifying the focal length as a function of a work distance.

3. Deflection unit (10, 110, 210) according to claim 1 or 2, wherein the focussing device (16) is configured to move a plurality of the at least two movable lenses (54, 56) jointly along the work beam path.

4. Deflection unit (10, 110, 210) according to any of the preceding claims, wherein the focussing device (16) is configured to move the at least two movable lenses (54, 56) in opposed directions.

5. Deflection unit (10, 110, 210) according to any of claims 3 to 4, wherein the distance between a first movable lens (56) of the movable lenses of the focusing device and a second movable lens (54) of the movable lenses of the focusing device is chosen such that the axial position of a virtual image produced by the first movable lens (56) and by the second movable lens (54) can vary within a range corresponding to the movement range of the second movable lens (54), wherein the second movable lens (54) is movable along the work beam path within the movement range.

6. Deflection unit (10, 110, 210) according to any of the preceding claims, wherein the control unit is further configured for controlling the shiftings of the at least two movable lenses (56, 54) along the working beam path such that the at least two movable lenses (56, 54) move along the working beam path in opposite directions.

7. Deflection unit (10, 110, 210) according to any of the preceding claims, the control unit being connected with a detection device (30) and being configured for controlling the focusing of the deflection unit fully automatically.

8. Deflection unit (10, 110, 210) according to any of the preceding claims, further comprising one or more shifting mechanisms (72, 74) configured for manually shifting the at least two movable lenses (56, 54) along the work beam path.

9. Deflection unit (10, 110, 210) according to any of the preceding claims, being dimensioned and designed such that four of such deflection units can be arranged so that for one or more work distances the work fields thereof join together to form a continuous flat total work field having 3.5 times to 4 times the size of the individual work fields; and/or being dimensioned and designed such that two of such deflection units can be arranged so that their work fields overlap on a common work field, wherein the common work field has a surface area at least equal to 50%, preferably at least 60%, particularly preferably at least 70% of the surface area of each individual work field.

10. Deflection unit (10, 110, 210) according to any of the preceding claims, wherein

     - the optical element (20) further transmits at least one other second wavelength at least partially;
     wherein the deflection unit (10, 110, 210) further comprises a first detection device (30), wherein the deflection unit further

         - defines a detection beam path followed by the detection beams (32) from the second window (24) to the first detection device (30), wherein the detection beams (32) are at least partially transmitted by the optical element (20), and
         - comprises an optical device (39) arranged in the detection beam path between the optical element (20) and the first detection device (30) and configured to modify a focal length for the detection beams (32);

     wherein the XY-deflection device (22) is arranged in the work beam path and in the detection beam path (14) between the second window (24) and the optical element (20) for deflecting the work beam and for scanning the outgoing work beam and for simultaneously deflecting the detection beams (32), so that they follow the detection beam path through the optical element (20) all the way to the first detection device (30).

11. Deflection unit (10, 110, 210) according to claim 10, wherein the optical device (39) is configured for adjusting the collimation, the focusing or a beam expansion depending on a setting of the XY-deflection device (22) and/or on a work distance.

12. Deflection unit (10, 110, 210) according to any of claims 10 or 11, wherein the first detection device is or comprises a camera (30) and comprises an imaging optics (40) for imaging the work region (34) on the camera (30), wherein the imaging optics (40) comprises the optical device (39) and the optical device (39) is configured to modify the focal length of the imaging optics (40).

13. Deflection unit (10, 210) according to any of the preceding claims, further comprising a second optical element (38) and a second detection device (58), wherein the second optical element (38)

     - is arranged in the image beam path between the optical element (20) and the first detection device (30),
     - reflects the second wavelength for forwarding to the first detection device (30) at least partially,
     - transmits other wavelengths for forwarding to the second detection device (58) at least partially.

14. Deflection unit (10, 110, 210) according to any of the preceding claims, for "Direct Powder Fusion", Vat Photopolymerisation and/or "Direct Energy deposition".

15. Use of a deflection unit (10, 110, 210) according to any of the preceding claims for additive manufacturing, in particular for "Direct Powder Fusion", Vat Photopolymerization and/or "Direct Energy Deposition".

**Revendications**

1. Unité de déviation (10, 110, 210) comprenant

     - une première fenêtre (12), à travers laquelle un faisceau de travail optique (14) peut entrer dans l'unité de déviation,
     - une deuxième fenêtre (24) à travers laquelle le faisceau de travail peut sortir de l'unité de déviation et à travers laquelle des faisceaux de détection (32) provenant d'une zone de travail (34) peuvent entrer dans l'unité de déviation le long du trajet respectif du faisceau de travail (14) sortant et à contre-sens de celui-ci,
     - un élément optique (20) qui réfléchit au moins partiellement une première longueur d'onde, dans laquelle l'unité de déviation

         - définit un premier trajet de faisceau de travail que parcourt le faisceau de travail (14) de la première fenêtre (12) vers la deuxième fenêtre (24) par l'intermédiaire d'une réflexion sur l'élément optique (20) et

**caractérisé en ce que** l'unité de déviation comprend en outre ce qui suit

- un dispositif de déviation XY (22), qui est disposé entre la deuxième fenêtre (24) et l'élément optique (20) dans le trajet du faisceau de travail, afin de dévier le faisceau de travail (14) et de balayer le faisceau de travail sortant et
- un dispositif de focalisation (16) pour la focalisation du faisceau de travail (14), dans lequel le dispositif de focalisation comprend au moins deux lentilles mobiles (5,4, 56) et présente une focale variable et est disposé dans le trajet du faisceau de travail entre la première fenêtre (12) et l'élément optique (20),

dans lequel le dispositif de focalisation (16) est configuré pour déplacer au moins deux lentilles des au moins deux lentilles mobiles (54, 56) simultanément et indépendamment l'une de l'autre et pour modifier un diamètre de focalisation du faisceau de travail (14) sans modifier en même temps une position de focalisation ; dans lequel l'unité de déviation (10, 110, 210) comprend en outre une unité de commande (70) configurée pour commander les déplacements des au moins deux lentilles mobiles (54, 56) du dispositif de focalisation (16) le long du trajet du faisceau de travail et pour régler la distance focale du dispositif de focalisation (16) dans son ensemble en fonction d'un réglage du dispositif de déviation XY (22).

**2.** Unité de déviation (10, 110, 210) selon la revendication 1, dans laquelle l'unité de commande (70) est en outre conçu pour modifier la focale en fonction d'une distance de travail.

**3.** Unité de déviation (10, 110, 210) selon la revendication 1 ou 2, dans laquelle le dispositif de focalisation (16) est conçu pour déplacer une pluralité des au moins deux lentilles mobiles (54, 56) conjointement le long du trajet du faisceau de travail.

**4.** Unité de déviation (10, 110, 210) selon l'une des revendications précédentes, dans laquelle le dispositif de focalisation (16) est conçu pour déplacer au moins deux lentilles mobiles (54, 56) dans des directions opposées.

**5.** Unité de déviation (10, 110, 210) selon l'une des revendications 3 à 4, dans laquelle la distance une première lentille mobile des lentille mobiles du dispositif de focalisation et une deuxième lentille mobile des lentille mobiles du dispositif de focalisation est choisie de façon à ce que la position axiale d'une image virtuelle générée par la première lentille mobile (56) et la deuxième lentille mobile (54) peut varier à l'intérieur d'une zone qui correspond à la zone de réglage de la deuxième lentille mobile (54), dans laquelle la deuxième lentille mobile (54) peut se déplacer le long du trajet du faisceau de travail à l'intérieur de la zone de travail.

**6.** Unité de déviation (10, 110, 210) selon l'une des revendications précédentes, dans lequel l'unité de commande est en outre configurée pour commander les déplacements des au moins deux lentilles mobiles (56, 54) le long du trajet du faisceau de travail de telle sorte que les au moins deux lentilles mobiles (56, 54) se déplacent le long du trajet du faisceau de travail dans des directions opposées.

**7.** Unité de déviation (10, 110, 210) selon l'une des revendications précédentes, l'unité de commande étant reliée à un dispositif de détection (30) et étant configurée pour commander la focalisation de l'unité de déviation de manière entièrement automatique.

**8.** Unité de déviation (10, 110, 210) selon l'une des revendications précédentes, qui comprend en outre un ou plusieurs mécanismes de poussée (72, 74) qui sont conçus pour le déplacement manuel les au moins deux lentilles mobiles (56, 54) le long du trajet du faisceau de travail.

**9.** Unité de déviation (10, 110, 210) selon l'une des revendications précédentes, qui est dimensionnée et conçue de façon à ce que quatre de ces unités de déviation puissent être disposées de telle sorte que, pour une ou plusieurs distances de travail, leurs champs de travail fusionnent en un champ de travail total plan ininterrompu d'une taille de 3,5 à 4 fois la taille des champs de travail individuels ; et/ou qui est dimensionnée et conçue de façon à ce que deux de ces unités de déviation puissent être disposées de telle sorte que leurs champs de travail se superposent à un champ de travail commun, dans lequel le champ de travail commun présente une surface qui est égal à au moins 50 %, de préférence à au moins 60 %, plus particulièrement de préférence à au moins 70 % de la surface d'un champ de travail individuel respectif.

**10.** Unité de déviation (10, 110, 210) selon l'une des revendications précédentes, dans laquelle

- l'élément optique (20) transmet au moins partiellement en outre au moins une autre deuxième longueur d'onde ;
dans laquelle l'unité de déviation (10, 110, 210) comprend en outre un premier dispositif de détection (30), dans laquelle l'unité de déviation

- définit en outre un trajet de faisceau de travail que les faisceaux de détection (32) parcourent de la deuxième fenêtre (24) vers le premier dispositif de détection (30), dans laquelle les faisceaux de détection (32) sont au moins partiellement transmis par l'élément optique (20) et
- comprend en outre un dispositif optique (39) qui est disposé dans le trajet des faisceaux de détection entre l'élément optique (20) et le premier dispositif de détection (30) et qui est conçu pour modifier une focale pour les faisceaux de détection (32) ;

dans laquelle le dispositif de déviation XY (22) est disposé entre la deuxième fenêtre (24) et l'élément optique (20) dans le trajet du faisceau de travail et dans le trajet des faisceaux de détection, afin de dévier le faisceau de travail (14) et afin de balayer le faisceau de travail sortant et afin de dévier simultanément les faisceaux de détection (32), afin qu'ils parcourent le trajet des faisceaux de détection à travers l'élément optique (20) jusqu'au premier dispositif de détection (30).

11. Unité de déviation (10, 110, 210) selon la revendication 10, dans laquelle le dispositif optique (39) est conçu pour une adaptation de la collimation, de la focalisation ou d'un élargissement des faisceaux en fonction d'un réglage du dispositif de déviation XY (22) et/ou d'une distance de travail.

12. Unité de déviation (10, 110, 210) selon la revendication 10 ou 11, dans laquelle le premier dispositif de détection est ou comprend une caméra (30) et qui comprend une optique de reproduction (40) pour la reproduction de la zone de travail (34) sur la caméra (30), dans laquelle l'optique de reproduction (40) comprend le dispositif optique (39) et le dispositif optique (39) est conçu pour modifier la focale de l'optique de reproduction (40).

13. Unité de déviation (10, 210) selon l'une des revendications précédentes, qui comprend en outre un deuxième élément optique (38) et un deuxième dispositif de détection (58), dans laquelle le deuxième élément optique (38)

- est disposé dans le trajet des faisceaux d'image entre l'élément optique (20) et le premier dispositif de détection (30),
- réfléchit au moins partiellement la deuxième longueur d'onde pour la transmettre au premier dispositif de détection (30),
- transmet au moins partiellement d'autres longueurs d'onde pour les transmettre au deuxième dispositif de détection (58).

14. Unité de déviation (10, 110, 210) selon l'une des revendications précédentes, pour une « Direct Powder Fusion », une photopolymérisation en cuve et/ou une « Direct Energy Deposition ».

15. Utilisation d'une unité de déviation (10, 110, 210) selon l'une des revendications précédentes, pour la fabrication additive, plus particulièrement pour une « Direct Powder Fusion », une photopolymérisation en cuve et/ou une « Direct Energy Deposition ».

**Fig. 1**

**Fig. 2**

**Fig. 3**

**Fig. 4**

**Fig. 5**

**Fig. 6**

**Fig. 7**

**IN DER BESCHREIBUNG AUFGEFÜHRTE DOKUMENTE**

**In der Beschreibung aufgeführte Patentdokumente**

- DE 102013017795 B3
- KR 20120114651 A
- US 20140263221 A1
- US 20050150876 A1